# EUROPEAN PATENT APPLICATION

(11) **EP 4 465 682 A1**
(43) Date of publication of application: **20.11.2024**
(21) Application number: 22917953.6
(22) Date of filing: 10.01.2022
(51) Int. Cl.: H04W 24/08

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/071147
(87) International publication number: WO 2023/130483

(57) **Abstract**

The present invention provides an information processing method and apparatus, a communication device, and a storage medium. The information method executed by a UE can comprise: obtaining a measurement relaxation parameter, the measurement relaxation parameter being used for the UE to relax measurement of a wireless signal transmitted by a network node, wherein the network node comprises a master network (MN) node; and/or a secondary network (SN) node.

## Description

### TECHNICAL FIELD

The disclosure relates to the field of communication technology, in particular to information processing methods and apparatuses, a communication device and a storage medium.

### BACKGROUND

A User Equipment (UE) in a connected state may measure a radio signal of a downlink of a serving cell. The radio signal includes: a Radio Link Management (RLM)-Reference Signal (RS) to detect radio link quality and determine whether the UE is out-of-sync or in-sync with the serving cell.

Beam Failure Detection (BFD) may be used by the UE in the connected state for detecting quality of a service beam. If the quality of the service beam is poor, the beam failure detection will be triggered to realize the beam or find a new service beam.

Radio Resource Management (RRM) may be used by the UE in the connected state for measuring quality of the radio signals of the serving cell and neighboring cells, so that the UE may switch or reside in a cell with better signal quality.

### SUMMARY

Embodiments of the disclosure provide information processing methods and apparatuses, a communication device and a storage medium.

A first aspect of embodiments of the disclosure provides an information processing method, which is performed by a User Equipment (UE). The method includes:
acquiring a measurement relaxation parameter; in which the measurement relaxation parameter is used by the UE for relaxing a measurement of a radio signal transmitted by a network node;
in which the network node includes:
   a Master Network (MN) node;
      and/or
   a Second Network (SN) node.

A second aspect of embodiments of the disclosure provides an information processing method, which is performed by a network node. The network node includes: a Master Network (MN) node or a Secondary Network (SN) node of a dual connectivity User Equipment (UE). The method includes:
sending relevant information of a measurement relaxation to the UE;
in which the relevant information includes at least one of:
a measurement relaxation parameter used for the measurement relaxation of the UE; or
a measurement relaxation indication, used for enabling or disabling the measurement relaxation of the UE.

A third aspect of embodiments of the disclosure provide an information processing method, which is performed by a Secondary Network (SN) node. The method includes:
transmitting, with a Master Network (MN) node, associated information of a User Equipment (UE) measurement relaxation;
in which the associated information includes at least one of:
   capability information, used for determining a measurement relaxation parameter of the UE;
   a measurement relaxation indication, used for enabling or disabling the UE measurement relaxation;
   a Secondary Cell Group (SCG)-specific measurement relaxation parameter; or
   assistant information, used by the MN node for determining the SCG-specific measurement relaxation parameter of the UE.

A fourth aspect of embodiments of the disclosure provides an information processing apparatus. The apparatus includes:
an acquiring module, configured to acquire a measurement relaxation parameter; in which the measurement relaxation parameter is used by a User Equipment (UE) for relaxing a measurement of a radio signal transmitted by a network node;
in which the network node includes:
   a Master Network (MN) node;
      and/or
   a Secondary Network (SN) node.

A fifth aspect of embodiments of the disclosure provides an information processing apparatus. The apparatus includes:
a third sending module, configured to send relevant information of a measurement relaxation to a User Equipment (UE);
in which the relevant information includes at least one of:
   a measurement relaxation parameter, used for the measurement relaxation of the UE; or
   a measurement relaxation indication, used for enabling or disabling the measurement relaxation of the UE.

A sixth aspect of embodiments of the disclosure provides an information processing apparatus, applied to a Secondary Network (SN) node. The apparatus includes:
a transmitting module, configured to transmit, with a Master Network (MN) node, association information of a User Equipment (UE) measurement relaxation;
in which the associated information includes at least one of:
   capability information, used for determining a measurement relaxation parameter of the UE;
   a measurement relaxation indication, used for enabling or disabling the UE measurement relaxation;
   a Secondary Cell Group (SCG)-specific measurement relaxation parameter; or
   assistant information, used by the MN node for determining SCG-specific measurement relaxation parameter of the UE.

A seventh aspect of embodiments of the disclosure provides a communication device, including a processor, a transceiver, a memory, and an executable program stored on the memory and executable by the processor, in which when the processor runs the executable program, the information processing method according to aforementioned first aspect, second aspect, or third aspect is performed.

An eighth aspect of embodiments of the disclosure provides a computer storage medium. The computer storage medium has an executable program stored thereon. After the executable program is executed by a processor, the information processing method according to aforementioned first aspect, the second aspect or the third aspect is performed.

In the technical solution according to embodiments of the disclosure, the measurement relaxation parameter is acquired for a dual connectivity UE, to relax the radio signal measurement of the MN node and/or SN node, thereby reducing the power consumption of the dual connectivity UE.

It is understandable that both the foregoing general description and the following detailed description are exemplary and explanatory only and are not restrictive of embodiments of the disclosure.

### BRIEF DESCRIPTION OF THE DRAWINGS

The accompanying drawings, which are incorporated in and constitute a part of this specification, illustrate embodiments consistent with the disclosure and together with the description serve to explain principles of embodiments of the disclosure.
FIG. 1 is a schematic structural diagram illustrating a wireless communication system according to an exemplary embodiment.
FIG. 2 is a schematic flowchart illustrating an information processing method according to an exemplary embodiment.
FIG. 3 is a schematic flowchart illustrating an information processing method according to an exemplary embodiment.
FIG. 4 is a schematic flowchart illustrating a control method of a user equipment (UE) according to an exemplary embodiment.
FIG. 5A is a schematic flowchart of a control method of a UE according to an exemplary embodiment;
FIG. 5B is a schematic flowchart illustrating a control method of a UE according to an exemplary embodiment.
FIG. 6 is a schematic flowchart illustrating a control method of a UE according to an exemplary embodiment.
FIG. 7 is a schematic flowchart illustrating a control method of a UE according to an exemplary embodiment.
FIG. 8 is a schematic flowchart illustrating an information processing method according to an exemplary embodiment.
FIG. 9 is a schematic structural diagram illustrating an information processing apparatus according to an exemplary embodiment.
FIG. 10 is a schematic structural diagram illustrating an information processing apparatus according to an exemplary embodiment.
FIG. 11 is a schematic structural diagram illustrating an information processing apparatus according to an exemplary embodiment.
FIG. 12 is a schematic structural diagram illustrating a UE according to an exemplary embodiment.
FIG. 13 is a schematic structural diagram illustrating a network node according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in following exemplary embodiments do not represent all possible implementations consistent with embodiments of the disclosure. Rather, they are merely examples of apparatuses and methods consistent with aspects of embodiments of the disclosure as recited in the appended claims.

Terms used in embodiments of the disclosure are for the purpose of describing specific embodiments only, and are not intended to limit embodiments of the disclosure. As used in the examples of this disclosure and the appended claims, the singular forms "a", "an" and "the" are also intended to include the plural forms unless the context clearly dictates otherwise. It is understandable that the term "and/or" as used herein refers to and includes any and all possible combinations of one or more of the associated listed items.

It is understandable that although embodiments of the disclosure may use the terms first, second, third, etc. to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" as used herein may be interpreted as "at" or "when" or "in response to determining".

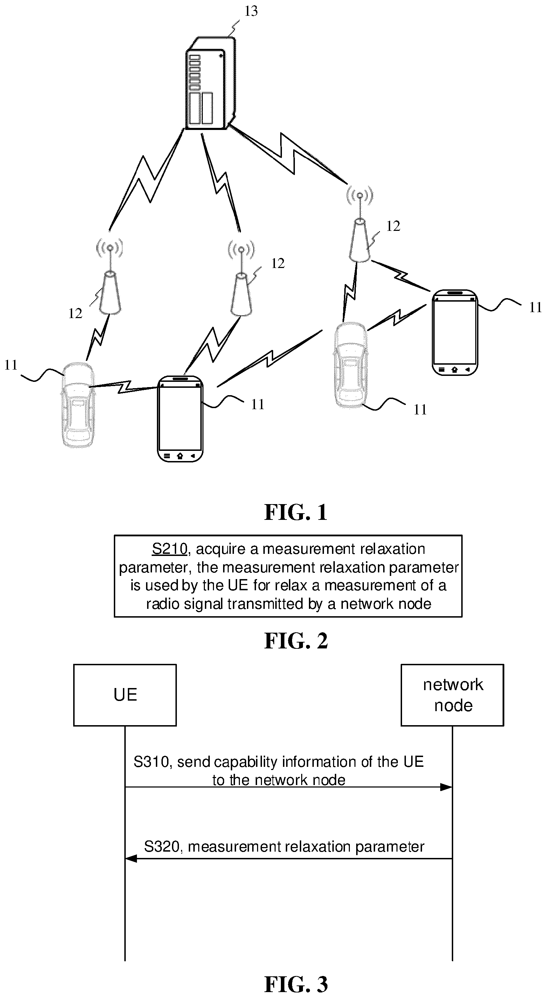

As illustrated in FIG. 1, which illustrates a schematic structural diagram of a wireless communication system according to embodiments of the disclosure. As illustrated in FIG. 1, the wireless communication system is a communication system based on cellular mobile communication technology, and the wireless communication system may include: several User Equipment (UEs) 11 and several access devices 12.

The UE 11 may be a device that provides voice and/or data connectivity to a user. The UE 11 may communicate with one or more core networks via a Radio Access Network (RAN). The UE 11 may be an Internet of Things UE, such as a sensor device, a mobile phone (or called a "cellular" phone), or a computer having an Internet of Things UE, such as a fixed, portable, pocket, hand-held, built-in or vehicle-mounted device. For example, a Station (STA), a subscriber unit, a subscriber station, a mobile station, a mobile, a remote station, an access point, a remote terminal, an access terminal, a user terminal, a user agent, a user device, or a user equipment (UE). Or, the UE 11 may also be a device of an unmanned aerial vehicle. Or, the UE 11 may also be a vehicle-mounted device, such as trip computer with a wireless communication function, or a wireless communication device connected externally to the trip computer. Or, the UE 11 may also be a roadside device, such as a street lamp, a signal lamp, or other roadside devices with a wireless communication function.

The access device 12 may be a network side device in a wireless communication system. The wireless communication system may be a 4th generation mobile communication (4G) system, also known as a Long Term Evolution (LTE) system. Or, the wireless communication system may also be a 5G system, also called New Radio (NR) system or 5G NR system. Or, the wireless communication system may also be a next-generation system of the 5G system. The access network in the 5G system may be called New Generation-Radio Access Network (NG-RAN). Or a MTC system.

The access device 12 may be an evolved access device (eNB) adopted in a 4G system. Or, the access device 12 may also be an access device (gNB) adopting a centralized-distributed architecture in the 5G system. When the access device 12 adopts the centralized-distributed architecture, it generally includes a central unit (CU) and at least two distributed units (DUs). The central unit is provided with Packet Data Convergence Protocol (PDCP) layer, Radio Link Control (RLC) layer, Media Access Control (MAC) layer protocol stacks. A Physical (PHY) layer protocol stack is set in the central unit. Embodiments of the disclosure do not limit the specific implementation manner of the access device 12.

A wireless connection may be established between the access device 12 and the UE 11 through a wireless air interface. In different embodiments, the wireless air interface is a wireless air interface based on the fourth-generation mobile communication network technology (4G) standard. Or, the wireless air interface is a wireless air interface based on the fifth-generation mobile communication network technology (5G) standard, such as n NR. Or, the wireless air interface may also be a wireless air interface based on a next-generation mobile communication network technology standard of the 5G.

In some embodiments, an End to End (E2E) connection may also be established between the UE 11, such as vehicle to everything (V2X) including a vehicle-to-vehicle (V2V) communication, a vehicle to Infrastructure (V2I) communication and vehicle to pedestrian (V2P) communication.

In some embodiments, the above wireless communication system may further include a network management device 13.

Several access devices 12 are connected to the network management device 13 respectively. The network management device 13 may be a core network device in a wireless communication system. For example, the network management device 13 may be a Mobility Management Entity (MME). Or, the network management device may be other core network devices, such as a Serving GateWay (SGW), a Public Data Network GateWay (PGW), a Policy and Charging Rules Function (PCRF) or a Home Subscriber Server (HSS). The implementation form of the network management device 13 is not limited in embodiments of the disclosure.

As illustrated in FIG. 2, embodiments of the disclosure provide an information processing method, performed by a UE. The method includes the following.

At step S210, measurement relaxation parameter(s) is/are acquired; in which the measurement relaxation parameter(s) is/are used by the UE for relaxing a measurement of a radio signal transmitted by a network node;
in which the network node includes:
a Master Network (MN) node;
   and/or
a Secondary Network (SN) node.

The UE according to embodiments of the disclosure may be a UE supporting a dual connectivity. The dual connectivity supported by the UE may include: Multi Radio Dual Connectivity (MR-DC), Evolution Universal mobile telecommunications system Terrestrial Radio Access Network-New Radio (E-UTRAN-NR) dual connectivity, a Next Generation Radio Access Network-Universal mobile telecommunications system Terrestrial Radio Access-New Radio (NG-RAN-UTRA-NR) dual connectivity, or a New Radio-New Radio (NR-NR) dual connectivity.

The dual connectivity UE may be in a connected state or a non-connected state. The non-connected state includes, but is not limited to, an inactive state and/or an idle state.

The measurement relaxation parameter(s) may be used by the UE for relaxing the measurement of the radio signal sent by one or more network nodes connected to the UE.

For example, the measurement relaxation parameter(s) may include:
a measurement relaxation criterion for indicating measurement relaxation condition(s) under which the measurement relaxation is performed;
   and/or
a measurement relaxation configuration, used for a radio signal measurement relaxation of the UE.

The frequency of performing the radio signal measurement that is based on measurement relaxation configuration is lower than the frequency of performing the radio signal measurement that is not based on the measurement relaxation configuration.

The measurement relaxation configuration may include at least one of:
measurement stop parameter(s), used for instructing the UE to determine to stop the radio signal measurement, for example the measurement stop parameter(s) may be used at least by the UE for determining the start and end time of stopping the radio signal measurement;
measurement period determination parameter(s) used for determining a measurement period after the frequency of measuring the radio signal is reduced;
evaluation period determination parameter(s) used for determining an evaluation-reduced evaluation period after the measurement relaxation; or
detection period determination parameter(s) used for determining a detection period-reduced period after the measurement relaxation.

The network nodes here may all be base stations. The base station may be an eNB and/or a gNB.

Since the UE supports the dual connectivity, the network nodes connected to the UE may be divided into master MN nodes of the primary serving cell and SN nodes of the secondary serving cell.

In some embodiments, the dual-connectivity UE performs the radio signal measurement based on the measurement relaxation parameter(s), including relaxing the radio signal measurement for the MN node and/or relaxing the radio signal measurement for the SN node.

In embodiments of the disclosure, the dual-connectivity UE will relax its own measurements by obtaining the measurement relaxation parameter(s), thereby reducing the measurements that are unnecessary when the measurement needs to be performed only at low frequencies or no measurement is needed and reducing the power consumption of the dual-connectivity UE caused by the measurement.

In some embodiments, the step S210 includes:
receiving the measurement relaxation parameter(s) sent by the network node;
   or
determining the measurement relaxation parameter(s) based on a protocol.

The measurement relaxation parameter(s) may be sent to the UE by the network node. For example, the MN node and/or the SN node of the UE sends the measurement relaxation parameter(s) to the UE.

If the measurement relaxation parameter(s) is/are sent by the network node to the UE, the UE may receive the measurement relaxation parameter(s) in advance, and when the UE needs to perform the measurement relaxation, the UE may receive an activation indication sent by the network device, and relax the radio signal measurement based on the activation indication and the previously received measurement relaxation parameter(s).

For example, the UE may receive a Radio Resource Control (RRC) signaling or a Medium Access Control Control Element (MAC CE) carrying the measurement relaxation parameter(s).

The UE may also determine the measurement relaxation parameter(s) based on the protocol. For example, if the protocol stipulates multiple sets of candidate measurement relaxation parameters, the UE may select one set of candidate measurement relaxation parameters as target measurement relaxation parameters based on its current remaining quantity of electricity and/or its own mobility. After the target measurement relaxation parameters are selected, the UE may report the information of the target measurement relaxation parameters to the network node, so that the network node may know the current measurement situation of the radio signal of the dual connectivity UE. Certainly, the UE may not report the information of the target measurement relaxation parameters.

In short, there are many ways for the UE to acquire the measurement relaxation parameter(s), and the specific implementation is not limited to any one of the above.

The UE adopts Evolution Universal mobile telecommunications system Terrestrial Radio Access Network-New Radio (E-UTRAN-NR) dual connectivity, and the network node includes an SN node of the E-UTRAN-NR dual connectivity;
or
the UE adopts Next Generation Radio Access Network-Universal mobile telecommunications system Terrestrial Radio Access-New (NG-RAN-UTRA-NR) dual connectivity, and the network node includes an SN node of NG-RAN-UTRA-NR dual connectivity; or
the UE adopts New Radio-Evolution Universal mobile telecommunications system Terrestrial Radio Access Network (NR-E-UTRA) dual connectivity, and the network node includes: an MN node of NR-E-UTRA dual connectivity;
   or
the UE adopts a New Radio-New Radio (NR-NR) dual connectivity, and the network node includes: an MN node of the NR-NR dual connectivity and/or an SN node of the NR-NR dual connectivity.

If the UE supports the dual connectivity, the dual connectivity UE in the connected state will establish the RRC connection with both the MN node and the SN node. At this time, one of the MN node and the SN node will perform the signaling and/or data communication with the UE frequently. Then the UE may exchange any information related to the measurement relaxation with the network node, for example, measurement relaxation parameter(s), capability information for indicating measurement relaxation capability(capabilities) of the UE, measurement relaxation request information, and/or a measurement relaxation indication.

In some embodiments, the measurement relaxation parameter(s) include at least one of:
Radio Link Monitoring (RLM) measurement relaxation parameter(s);
Beam Failure Detection (BFD) measurement relaxation parameter(s); or
Radio Resource Measurement (RRM) measurement relaxation parameter(s).

After acquiring the RLM measurement relaxation parameter(s), the UE may stop an RLM measurement for a period of time or reduce a frequency of performing the RLM measurement based on the RLM measurement relaxation parameter(s).

The RLM measurement may be as follows.

The UE in the connected (RRC_CONNETED) state monitors the downlink radio link quality by measuring the downlink RLM-RS (SSB-RS and/or CSI-RS) of the serving cell (SpCell, inside active BWP), and determines whether the UE is in downlink in-sync (IS) state or out-of-sync (OOS) state with the serving cell.

In detail, the UE periodically measures each RLM-RS, compares the measured value with an in-sync threshold (Qin) and an out-of-sync threshold (Qout), and determines the IS/OOS state of the UE. The physical layer sends the obtained IS/OOS state to the higher layer. The higher layer here includes, but is not limited to, an RRC layer. The higher layer may be any layer above the physical layer.

In the out-of-sync evaluation period (TEvaluate_out), it is evaluated whether the measured value is lower than the threshold Qout. When the measured results are all lower than Qout, the layer 1 (L1) will report an out-of-sync (OOS) indication to the higher layer.

In the in-sync evaluation period (TEvaluate_in), it is evaluated whether the measured value is better than the threshold Qin. When any of measured results is better than Qin, L1 reports an IS indication to the higher layer.

The higher layer decides a next action based on the reported information. That is, when an OOS counter records consecutive N310 OOS indications, the UE starts a Radio Link Failure (RLF) timer T310 configured by the network; and
when an IS counter records N311 consecutive IS indications reported by the physical layer, the timing of a T310 is stopped; and when the T310 expires, the UE reports the RLF.

After acquiring the BFD measurement relaxation parameter(s), the UE may stop a BFD measurement for a period of time or reduce a frequency of performing the BFD measurement based on the BFD measurement relaxation parameter(s).

Beam-level communication links are easily blocked, resulting in poor communication quality or even communication failure. When a downlink beam fails, if the UE has a new candidate beam to replace the current failed beam, there is an opportunity to reduce a process of the RLF beam failure recovery caused by the beam failure.

BFD: The detection object is the current service beam (SpCell and SCell) of the UE, and the measured content is the SSB-RS/CSI-RS (up to 2) of the corresponding service beam. The measured results within the evaluation period (TEvaluate_BFD) are compared with the Qout_LR (BLER=10%) threshold. When all the measured results are lower than the threshold, a beam failure indication (Beam Failure Instance Indication) is triggered once.

Before the configured beam failure detection timer (beamFailureDetectionTimer) expires, when the number of L1 beam failure indications reaches a configured threshold (beamFailureInstanceMaxCount), the UE declares a beam failure and starts Candidate Beam Detection (CBD).

CBD: The detection object is candidate beam set(s) configured by the network for the UE, the measured content is the SSB-RS and/or CSI-RS corresponding to the candidate beams, and the measurement basis is the comparison between the measured results within the evaluation period (TEvaluate_CBD) and the configured threshold Qin_LR (L1-RSRP). A candidate beam corresponding to the measured result that is higher than the threshold is used as an available new beam.

The UE notifies the network of the found available new beam, so that the network knows that the new beam may be used for downlink transmission.

After acquiring the RRM measurement relaxation parameter(s), the UE may stop the RRM measurement for a period of time or reduce the frequency of performing the RRM measurement based on the RRM measurement relaxation parameter(s).

The RRM measurement includes measuring the SSB of the serving cell and/or the SSB of the neighboring cells, and performing cell handover and/or cell reselection based on the measured result of the SSB. Neighboring cells may further include same-frequency neighboring cells, different-frequency neighboring cells, and/or different-system neighboring cells.

As illustrated in FIG. 3, embodiments of the disclosure provide an information processing method, performed by a UE. The method includes the following.

At step S310, capability information of the UE is sent to a network node.

The UE may be a UE supporting the dual connectivity and/or a UE with the dual connectivity.

Some capability information is used by the network node for determining measurement relaxation parameter(s) and/or used by the network node for determining whether to instruct the UE to relax a radio signal measurement.

The measurement relaxation parameter(s) here may be the measurement relaxation parameter(s) mentioned in any of foregoing embodiments.

For example, the capability information indicates relaxation measurement(s) supported by the UE and/or indicates a relaxation degree of the radio signal measurement supported by the UE, so that the network node may determine, based on the capability information, whether the UE supports the relaxation measurement of the radio signal and/or the relaxation degree of the radio signal measurement supported by the UE.

In some embodiments, the reporting of the UE capability information may be used in combination with the methods illustrated in FIG. 2 above, or may be used alone. For example, as illustrated in FIG. 3, after the UE reports the capability information, the network node determines, for the UE based on the UE capability information, the measurement relaxation parameter(s) used for a Master Cell Group (MCG)-specific measurement relaxation and/or a Secondary Cell Group (SCG)-specific measurement relaxation, and sends the determined measurement relaxation parameter(s) to the UE in step S320.

For example, the capability information includes at least one of:
a first capability indicator, for indicating whether the UE supports an RLM measurement relaxation;
a second capability indicator, for indicating whether the UE supports a BFD measurement relaxation; or
a third capability indicator, for indicating whether the UE supports an RRM measurement relaxation.

The first capability indicator may consist of one or more bits, and different bit values of these bits represent two capability states that the UE supports the RLM measurement relaxation and the UE does not support the RLM measurement relaxation.

The second capability indicator may consist of one or more bits, and different bit values of these bits represent two capability states that the UE supports the BFD measurement relaxation and the UE does not support the BFD measurement relaxation.

The third capability indicator may consist of one or more bits, and different bit values of these bits represent two capability states that the UE supports the RRM measurement relaxation and the UE does not support the RRM measurement relaxation.

In some embodiments, the capability information may include a field, and different bits of the field may respectively correspond to one or more of the first capability indicator, the second capability indicator and the third capability indicator.

In some embodiments, when there is an association between the measurement relaxation capabilities supported by the UE, two or three measurement relaxations supported by the UE among the RLM measurement relaxation, the BFD measurement relaxation, and the RRM measurement relaxation may be collectively indicated. For example, assuming that the UE supports the RRM measurement relaxation, it means that the UE also supports the RLM measurement relaxation synchronously. At this time, one indicator may be used to synchronously indicate whether the UE supports two measurement relaxations, thereby reducing the bit overhead.

In some embodiments, the capability information includes:
a first type of capability information, for uniformly indicating a measurement relaxation capability for all Cell Groups (CGs) of the UE;
a second type of capability information, for separately indicating the MCG-specific measurement relaxation capability of the UE and/or the Second Cell Group (SCG)-specific measurement relaxation capability of the UE; or
a third type of capability information, for indicating an relationship between the MCG-specific measurement relaxation capability of the UE and the SCG-specific measurement relaxation capability of the UE.

For a dual connectivity UE, the radio measurement performed by the UE may include: measurement of the primary cell and measurement of the secondary cell.

One cell group may include at least one cell.

The first type of capability information will uniformly indicate the measurement relaxation capability for both the MCG and the SCG of the UE. At this time, when the first type of capability information indicates that the UE supports the measurement relaxation, it means that the UE supports the measurement relaxations on both the MCG and the SCG at the same time. When the first type of capability information indicates that the UE does not support the measurement relaxation, it means that the UE does not support the measurement relaxations on the MCG and the SCG at the same time.

The first type of capability information may be indicated by one bit, which has the characteristics of small bit overhead.

The second type of capability information is per CG or CG-distinct, separately indicating whether the UE supports the measurement relaxation for different CGs. For example, the second type of capability information includes: an indicator for indicating whether the UE supports the MCG measurement relaxation and/or an indicator for indicating whether the UE supports the SCG measurement relaxation. In an example, the second type of capability indication information may be set with two bits for each type of measurement, one bit is used to indicate whether the UE supports the relaxation of the measurement on the MCG, and the other bit is used to indicate whether the UE supports the relaxation of the measurement on the SCG.

The third type of capability information is an associated indication. For example, if the UE indicates or supports the RLM measurement relaxation on the MCG, and the UE must support the RLM measurement relaxation on the SCG, then this may be indicated by the third type of capability information. As another example, if the UE supports the BDF measurement relaxation on the SCG, then it may be considered that the UE must support the BDF measurement relaxation on the MCG.

For example, the step S310 may include at least one of:
in response to the UE adopting an Evolution Universal mobile telecommunications system Terrestrial Radio Access Network-New Radio (E-UTRAN-NR) Dual Connectivity (EN-DC), sending the first type of capability information of the UE to the SN node or MN node of the EN-DC;
in response to the UE adopting a New Radio-Evolution Universal mobile telecommunications system Terrestrial Radio Access Network (NR-E-UTRA) Dual Connectivity (NE-DC), sending the first type of capability information of the UE to the MN node of the NE-DC; or
in response to the UE adopting New Radio-New Radio (NR-NR) Dual Connectivity (NR-DC), sending the first type of capability information of the UE to the MN node of the NR-DC.

The UE selects, based on the dual connectivity type of the UE, the MN node or the SN node to which the first type of capability information is sent. In a case of configuring the measurement relaxation parameter(s) by a network node, the measurement relaxation parameter(s) may be configured and sent by the network node that has received the capability information to the UE. In this way, the information interaction between the MN node and the SN node connected to the UE is reduced.

In some embodiments, sending the capability information of the UE to the network node includes at least one of:
sending, to the MN node, the second type of capability information that separately indicates the MCG-specific measurement relaxation capability of the UE; or
sending, to the SN node, the second type of capability information that separately indicates the SCG-specific measurement relaxation capability of the UE.

In case of reporting the second type of capability information, the UE reports, to the MN node, the second type of capability information that is the MCG-specific measurement relaxation capability; and send, to the SN node, the second type of capability information that is the SCG-specific measurement relaxation capability of the UE

In some embodiments, sending the capability information of the UE to the network node includes at least one of:
sending the capability information to the MN node through a Signal Radio Bearer (SRB) SRB of the MN node;
in response to the SN node has a configured SRB, sending the capability information to the SN node through the SRB of the SN node; or
in response to the SN node having no configured SRB, sending the capability information to the MN node through the SRB of the MN node, in which the capability information is forwarded or transparently transmitted to the SN node by the MN node.

Generally, the MN node of the UE has a configured SRB for signaling transmission with the UE, but the SN node may not have a configured SRB for signaling transmission with the UE. At this time, the MCG-specific measurement relaxation capability of the UE and the SCG-specific measurement relaxation capability of the UE may all be sent to the MN node through the configured SRB of the MN node. In case of sending by the UE the second type of capability information that is the SCG-specific measurement relaxation capability, after the MN node receives this second type of capability information, the MN node may forward or transparently transmit this second type of capability information to the SN node.

When the SN node itself has a configured SRB, the UE may choose to send the second type of capability information to the SN node through the configured SRB of the SN node.

Certainly, in some cases, even if the SN node has a configured SRB, considering that the MN node may know the SCG-specific measurement relaxation capability of the UE, the UE may still choose to send the second type of capability information that is the SCG-specific measurement relaxation capability to the MN node through the configured SRB of the MN node.

For example, the MN node may configure SRB1 and/or SRB2 for the UE. If the SN node has a configured SRB for communication with the UE, at least SRB3 may be configured.

If the UE sends the capability information to the MN node, the UE may send the capability information to the MN node through SRB1 and if the UE sends the capability information to the SN node, the UE may send the capability information to the SN node through SRB3.

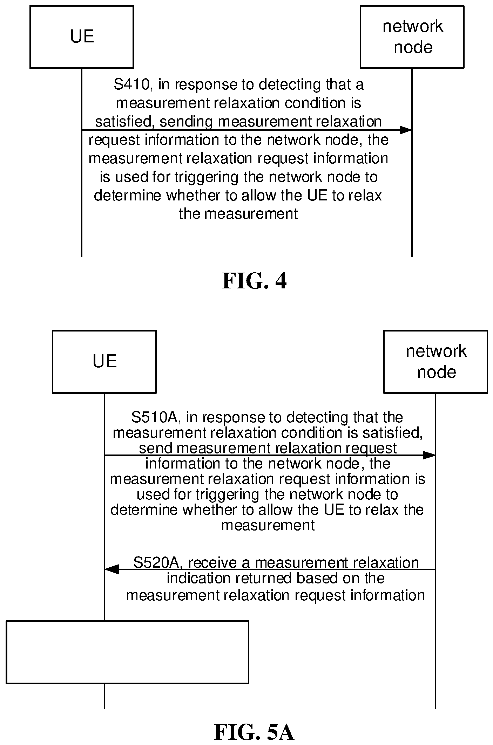

As illustrated in FIG. 4, embodiments of the disclosure provide an information processing method, performed by a UE. The method includes the following.

At step S410, in response to detecting that a measurement relaxation condition is met, measurement relaxation request information is sent to the network node; in which the measurement relaxation request information is used for triggering the network node to determine whether to allow the UE measurement relaxation.

The information processing method may be implemented alone or in combination with foregoing embodiments.

For example, the measurement relaxation condition may be indicated by the measurement relaxation criterion in aforementioned measurement relaxation parameter(s).

The network node here may be an MN node and/or an SN node corresponding to any of aforementioned dual connectivity types.

For example, after the UE receives the measurement relaxation parameter(s) from the network node or determines the measurement relaxation parameter(s) to be used based on the protocol, the UE determines whether a current situation meets the relaxation condition based on the measurement relaxation criterion in the measurement relaxation parameter(s). When the relaxation condition is met, the UE sends the measurement relaxation request information to the network node. When the network node allows the UE to relax the measurement, the UE will receive an acknowledgment indication. When the network node does not allow the UE to relax the measurement, the UE may receive a negative indication or not receive any response. After receiving the acknowledgment indication, the UE relaxes at least one measurement among the RLM measurement, the RRM measurement and/or the BFD measurement based on relaxation configuration(s) in the measurement relaxation parameter(s); otherwise, the UE does not relax the measurement.

In some embodiments, embodiments of the disclosure provide an information processing method, performed by a UE. The method includes:

in response to detecting that the measurement relaxation condition is satisfied, sending a notification to the network node, in which the notification is used for indicating that the measurement relaxation condition is satisfied.

The information processing method may be implemented alone or in combination with foregoing embodiments.

For example, the measurement relaxation condition may be indicated by the measurement relaxation criterion in aforementioned measurement relaxation parameter(s).

The network node here may be an MN node and/or an SN node corresponding to any of aforementioned dual connectivity types.

For example, after the UE receives the measurement relaxation parameter(s) from the network node or determines the measurement relaxation parameter(s) to be used based on the protocol, the UE determines whether a current situation meets the relaxation condition based on the measurement relaxation criterion in the measurement relaxation parameter(s). When the relaxation condition is met, the UE sends a measurement notification to the network node. When the network node allows the UE to relax the measurement, the UE will receive an acknowledgment indication. When the network node does not allow the UE to relax the measurement, the UE may receive a negative indication or not receive any response. After receiving the acknowledgment indication, the UE relaxes at least one measurement among the RLM measurement, the RRM measurement and/or the BFD measurement based on the relaxation configuration in the measurement relaxation parameter(s); otherwise, the UE does not relax the measurement.

As illustrated in FIG. 5A, embodiments of the disclosure provide an information processing method, performed by a UE. The method includes the following.

At step SS 10A, in response to detecting that the measurement relaxation condition is met, measurement relaxation request information is sent to the network node; in which the measurement relaxation request information is used for triggering the network node to determine whether to allow the UE measurement relaxation.

At step S520A, a measurement relaxation indication returned based on the measurement relaxation request information is received.

At step S530A, in response to the measurement relaxation indication indicating to allow the UE measurement relaxation, a radio signal is measured based on relaxation configuration(s) in the measurement relaxation parameter(s).

After the dual connectivity UE detects that the measurement relaxation condition is met, the dual connectivity UE sends the measurement relaxation request information to the network node. After the MN node and/or SN node of the dual connectivity UE receives the measurement transmission request message, if the MN node and/or SN node allow the UE to relax the measurement, the UE may receive an enabling indication in the measurement relaxation indication; and if the MN node and/or SN node do not allow the UE to relax the measurement, the UE may not receive the enabling indication in the measurement relaxation indication or may receive a disabling indication.

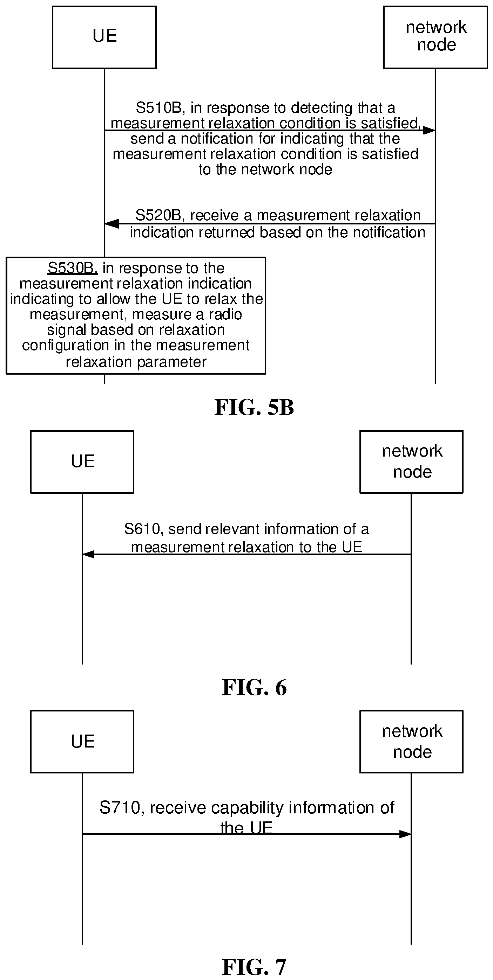

As illustrated in FIG. 5B, embodiments of the disclosure provide an information processing method, performed by a UE. The method includes the following.

At step S510B, in response to detecting that the measurement relaxation condition is satisfied, a notification for indicating that the measurement relaxation condition is satisfied is sent to the network node.

At step S520B, a measurement relaxation indication returned based on the notification is received.

At step S530B, in response to the measurement relaxation indication indicating to allow the UE measurement relaxation, the radio signal is measured based on relaxation configuration(s) in the measurement relaxation parameter(s).

After the dual connectivity UE detects that the measurement relaxation condition is met, the dual connectivity UE sends the notification to the network node. After the MN node and/or SN node of the dual connectivity UE receives the notification, if the MN node and/or SN node allow the UE to relax the measurement, the UE may receive the enabling indication in the measurement relaxation indication, and if the MN node and/or the SN node does not allow the UE to relax the measurement, the UE may not receive the enabling indication in the measurement relaxation indication or receive the disabling indication.

When the network node instructs to allow the UE to send the measurement, the UE may measure the radio signals based on the relaxation configuration(s) in the measurement relaxation parameter(s). The relaxation configuration(s) at this time may include: a configuration for stopping the measurement and/or a configuration for reducing a frequency of performing the measurement. If the measurement of the radio signal is based on the configuration of stopping the measurement, the UE will stop measuring the radio signal for a period of time. If the measurement of the radio signal is based on the configuration of reducing the frequency of performing the measurement, the UE will reduce the frequency of measuring the radio signal.

In some embodiments, the measurement relaxation indication comprises one of:
an enabling indication, for enabling the UE measurement relaxation; or
a disabling indication, for disabling the UE measurement relaxation.

The enabling indication may trigger the UE to start the measurement relaxation; and the disabling indication may instruct the UE to stop the measurement transmission and/or not start the measurement transmission.

In some embodiments, the measurement relaxation indication may be carried in the measurement relaxation parameter(s) for sending. When the measurement relaxation indication is included in the measurement relaxation parameter(s) and sent to the UE, the measurement relaxation indication may be explicitly indicated by the network device or the measurement relaxation indication may be implicitly by whether other content in the measurement relaxation parameter(s) is sent. Other content here includes, but is not limited to: measurement relaxation criteria and/or measurement relaxation configuration.

Satisfying the measurement relaxation condition in foregoing embodiments may include:
satisfying a first condition, i.e., a displacement of the UE within a preset duration being less than a first threshold, and/or a fluctuation value of radio signal quality measured by the UE being less than a third threshold;
   or
satisfying the second condition, i.e., radio signal quality measured by the UE being greater than a second threshold.

When the displacement of the UE within the preset duration is less than the first threshold and/or the fluctuation value of the radio signal quality is less than the third threshold, it may be considered that a mobility state of the UE satisfies a stationary condition and/or a quasi-stationary or low mobility state, which represents that the probability that UE performs cell switching and/or beam switching based on the measured results of various radio signal measurements is relatively small. Thus, the frequency of measuring the radio signals by UE may be appropriately reduced, thereby reducing the power consumption caused by UE measurement and prolonging the standby time.

The preset duration may be any time length value defined by the relaxation condition. For example, the time length value may be 10 minutes (min), 5 min, or 1 min, or 30 seconds (s).

When a movement amount of the UE is small, assuming that the transmission power of the radio signal of the MCG and/or SCG remains stable, and under the same radio environment, the radio signal quality measured by the UE will also remain relatively stable.

For example, the radio signal quality may be Reference Signal Received Power (RSRP), Reference Signal Received Quality (RSRQ) or Signal to Interference plus Noise Ratio (SINR) obtained by measuring the Synchronization Signal Block and/or the Channel State Information Reference Signal through the UE.

When the radio signal quality measured by the UE is higher than a corresponding radio signal quality threshold, it means that the movement amount of the UE is small or the UE is in the center of a cell, and thus the radio signal measurement may be appropriately stopped and/or the frequency of performing the measurement may be reduced, thereby reducing the power consumption of the UE and extending the standby time of the UE.

In some embodiments, when the radio signal quality measured by the UE is always good, the UE may continue to reside in the current serving cell even if there is a certain fluctuation in the radio signal quality, and it may be determined whether the measurement relaxation condition is met based solely on whether the radio signal quality value measured by the UE is greater than the second threshold.

The fluctuation value may be a variance or standard deviation of the radio signal quality measured by the UE within a period of time or a difference between the maximum value and the minimum value of the radio signal quality measured by the UE within a period of time. The fluctuation value more intuitively reflects the fluctuation of the radio signal quality measured by the UE. In this way, in some embodiments, it may be determined whether the current situation satisfies the measurement relaxation condition based solely on the fluctuation value of the radio signal quality.

In order to accurately control whether the UE relaxes the measurement, in determining whether the measurement relaxation condition is met based on the radio signal quality, it may be determined whether the measurement relaxation condition is met based on whether the radio signal quality is higher than the second threshold and based on the fluctuation value of the radio signal quality.

For example, satisfying the second condition includes at least one of:
the radio signal quality of the MCG measured by the UE being greater than an MCG signal quality threshold, and/or the radio signal quality of the MCG measured by the UE being greater than an MCG fluctuation threshold;
the radio signal quality of the SCG measured by the UE being greater than an SCG signal quality threshold, and/or the radio signal quality of the SCG measured by the UE being greater than the SCG fluctuation threshold; or
the radio signal quality of the MCG and/or the SCG measured by the UE being greater than a common signal quality threshold, and/or the radio signal quality of the MCG and/or the SCG measured by the UE being greater than a common fluctuation threshold.

Measuring the radio signal quality of the MCG means measuring the radio signal quality of cell(s) in the MCG, such as measuring the radio signal quality of the primary cell (Pcell) in the MCG or measuring the radio signal quality of all cells in the MCG.

Measuring the radio signal quality of the SCG means measuring the radio signal quality of cell(s) in the SCG, such as measuring the radio signal quality of the primary secondary cell (Pscell) in the SCG or measuring the radio signal quality of all cells in the SCG.

Considering the location of the UE, the MCG and the SCG may have the same threshold or different thresholds.

When thresholds are configured independently for the MCG and the SCG, the MCG signal quality threshold may be equal to or not equal to the SCG signal quality threshold and the SCG fluctuation quality threshold may be equal to or not equal to the MCG signal quality threshold.

If the common radio signal threshold and the common fluctuation threshold are used, the UE will only receive one signal quality threshold and/or one fluctuation threshold, and the UE will use this signal quality threshold and/or this fluctuation threshold for both the SCG measurement and the MCG measurement to determine whether the measurement relaxation condition is met.

For example, in some embodiments, in response to detecting that the measurement relaxation condition is satisfied, sending the measurement relaxation request information to the network node included at least one of:
when the radio signal quality of the MCG measured by the UE meets the measurement relaxation condition, the UE may send to the network node a notification indicating that the radio signal quality of the MCG meets the measurement relaxation condition or report to the network node the measurement relaxation request information for requesting for relaxing the MCG measurement;
when the radio signal quality of the SCG measured by the UE meets the measurement relaxation condition, the UE may send to the network node a notification indicating that the radio signal quality of the SCG meets the measurement relaxation condition or report to the network node the measurement relaxation request information for requesting for relaxing the SCG measurement;
when the radio signal quality of the MCG measured by the UE meets the measurement relaxation condition, the UE may send to the network node a notification indicating that the radio signal quality of the MCG meets the measurement relaxation condition or report to the network device the measurement relaxation request information for requesting for relaxing the MCG measurement and the SCG measurement;
when the radio signal quality of the SCG measured by the UE meets the measurement relaxation condition, the UE may send to the network device a notification indicating that the radio signal quality of the SCG meets the measurement relaxation condition or report to the network device the measurement relaxation request information for requesting for relaxing the SCG measurement and the MCG measurement; or
when the radio signal quality of the MCG measured by the UE meets the measurement relaxation condition and the radio signal quality of the SCG measured by the UE meets the measurement relaxation condition, the UE may notify the network that the radio signal quality of the MCG and the radio quality of the SCG meet the measurement relaxation condition or report the measurement relaxation request information for requesting for relaxing the MCG measurements and/or the SCG measurement.

When the radio signal quality of one CG group satisfies the measurement relaxation condition, it requests to relax the radio signal measurement of the corresponding CG, which may reduce the frequency of performing the radio measurement by the UE as much as possible and ensure that the communication quality of the two connections of the UE is stable at the same time.

When the radio signal quality of one CG group satisfies the measurement relaxation condition, it requests to relax the radio measurement of the MCG and the radio measurement of the SCG at the same time, which may reduce the frequency of performing the radio measurement by the UE as much as possible and minimize the power consumption of the UE caused by the radio measurement to the greatest extent.

Only when it is detected that both the radio signal quality of the MCG and the radio signal quality of the SCG meet the measurement relaxation condition, the measurement relaxation is requested, so that the communication quality of the dual connectivity of the UE may be ensured as much as possible and the power consumption of the UE caused by the measurement may be appropriately reduced.

In an embodiment, in response to detecting that the measurement relaxation condition is met, sending the measurement relaxation request information to the network node or sending the notification indicating that the measurement relaxation condition is met to the network node includes:
in response to detecting that the measurement relaxation condition is satisfied, sending the measurement relaxation request information to the network node or sending the notification indicating that the measurement relaxation condition is met to the network node through an SRB of the network node.

The UE reports the measurement relaxation request information or the notification to the corresponding network node through the configured SRB of the MN node and/or the SN node.

For example, the measurement relaxation parameter(s) may include:
a first type of relaxation configuration, being a measurement relaxation configuration uniformly for all CGs; in some embodiments, the first type of relaxation configuration may be a relaxation configuration for the entire UE, which may be considered as a UE-level configuration; or
a second type of relaxation configuration, being a MCG-specific measurement relaxation configuration and/or a SCG-specific measurement relaxation configuration, in some embodiments, the second type of relaxation configuration may be a CG-specific configuration, that is a CG-granularity configuration.

The first type of relaxation configuration is the measurement relaxation configuration for both the MCG and the SCG. The UE will relax the ratio measurement of the MCG and the radio measurement of the SCG based on the same measurement relaxation configuration, or relax only the measurement of the MCG, such as the low mobility measurement configuration, and the terminal only perform the Pcell measurement of the MCG.

The second type of relaxation configuration is a CG-distinct measurement relaxation configuration. For example, when the measurement relaxation configuration included in the measurement relaxation parameter(s) is the second type of relaxation configuration, the second type of relaxation configuration may be the MCG-specific measurement relaxation configuration and/or the SCG-specific measurement relaxation configuration. In relaxing the measurement, the UE relaxes the radio measurement of the MCG based on the MCG-specific measurement relaxation configuration; and/or relaxes the radio measurement of the SCG based on the SCG-specific measurement relaxation configuration. The measurement may be a one-by-one measurement decision for cells in a certain CG or a combined decision for all cells.

When the relaxation measurement parameter adopts the second type of relaxation measurement configuration, it may be flexibly configured based on the conditions of the MCG and SCG.

In some embodiments, receiving the measurement relaxation parameter(s) sent by the network node includes:
receiving the first type of relaxation configuration sent by the MN node;
   or
receiving the second type of relaxation configuration that is the MCG-specific measurement relaxation configuration sent by the MN node, and/or receiving the second type of relaxation configuration that is the SCG-specific measurement relaxation configuration sent by the SN node;
   or
receiving the second type of relaxation measurement configuration that is the MCG-specific measurement relaxation configuration sent by the MN node, and/or receiving the second type of relaxation configuration that is the SCG-specific measurement relaxation configuration sent by the MN node.

If the measurement relaxation parameter(s) include(s) the first type of relaxation configuration and the UE receives the measurement relaxation configuration from the network node, then the UE receives the measurement relaxation parameter(s) from the MN node or at least receives the first type of relaxation configuration from the MN node.

If the measurement relaxation parameter(s) include(s) the second type of relaxation configuration, then the UE receives the second type of relaxation configuration that is the MCG-specific measurement relaxation configuration from the MN node alone and receive the second type of relaxation configuration that is the SCG-specific measurement relaxation configuration from the SN node, or the UE receives these second type of relaxation configuration uniformly sent by the MN node.

In some embodiments, if the relaxation configuration is received from the MN node, all measurement relaxation parameters may be uniformly received from the MN node. If the relaxation configuration is received from the SN node, all measurement relaxation parameters may be uniformly received from the SN node, thereby reducing the number of interactions between the UE and the MN node and reducing the power consumption caused by excessive interactions, for example, for the EN-DC scenario.

If the measurement relaxation parameter(s) is/are sent by the MN node, then the UE may receive the measurement relaxation parameter(s) through a configured SRB (for example, SRB 1) of the MN node. If the measurement relaxation parameter(s) is/are sent by the SN node, then the UE may receive the measurement relaxation parameter(s) through a configured SRB (for example, SRB3) of the SN node.

In some embodiments, the measurement relaxation configuration may be divided into multiple parameter sets and may be combined in different delivery methods. For example, the first type of relaxation configuration parameters are uniformly delivered to the UE through the MN node, while the second type of relaxation configuration parameters may be delivered to the UE from the MN node and the SN node respectively.

As illustrated in FIG. 6, embodiments of the disclosure provide an information processing method, performed by a network node. The network node includes: an MN node or an SN node of a dual-connectivity UE. The method includes the following.

At step S610, relevant information of measurement relaxation is sent to the UE.

The relevant information includes at least one of:
measurement relaxation parameter(s) used for the measurement relaxation of the UE; or
a measurement relaxation indication, used for enabling or disabling the measurement relaxation of the UE.

The network node will exchange the measurement relaxation parameter(s) associated with the measurement relaxation with the dual connectivity UE.

The measurement relaxation parameter(s) may be used by the UE for relaxing the measurement of the radio signal sent by one or more network nodes connected to the UE.

For example, the measurement relaxation parameter(s) may include:
a measurement relaxation criterion for indicating measurement relaxation condition(s) under which the measurement relaxation is performed;
   and/or
a measurement relaxation configuration, used for a radio signal measurement relaxation of the UE.

The frequency of performing the radio signal measurement that is based on measurement relaxation configuration is lower than the frequency of performing the radio signal measurement that is not based on the measurement relaxation configuration.

The measurement relaxation configuration may include at least one of:
measurement stop parameter(s), used for instructing the UE to determine to stop the radio signal measurement, for example the measurement stop parameter(s) may be at least used by the UE for determining the start and end time of stopping the radio signal measurement;
measurement period determination parameter(s) used for determining a measurement period after the frequency of measuring the radio signal is reduced;
evaluation period determination parameter(s) used for determining an evaluation-reduced evaluation period after the measurement relaxation; or
detection period determination parameter(s) used for determining a detection period-reduced period after the measurement relaxation.

The network nodes here may all be base stations. The base station may be an eNB and/or a gNB.

The network node performing the information processing method may be an MN node or an SN node of the dual connectivity of the UE. For example, the UE adopts the E-UTRAN-NR dual connectivity and then the network node performing the information processing method includes the SN node of the E-UTRAN-NR dual connectivity;
or
the UE adopts an NG-RAN-UTRA-NR dual connectivity, and then the network node performing the information processing method includes: an SN node of the NG-RAN-UTRA-NR dual connectivity;
   or
the UE adopts the NR-E-UTRA dual connectivity, and then the network node performing the information processing method includes: an MN node of the NR-E-UTRA dual connectivity;
   or
the UE adopts the NR-NR dual connectivity, and then the network node performing the information processing method includes: an MN node of the NR-NR dual connectivity and/or an SN node of the NR-NR dual connectivity.

Through the interaction of the relevant information, the dual connectivity UE may relax the radio signal measurement, thereby reducing the power consumption caused by the measurement and prolonging the standby time of the UE.

As illustrated in FIG. 7, embodiments of the disclosure provide an information processing method, performed by a network node. The network node includes: an MN node or an SN node of a dual-connectivity UE. The method includes the following.

At step S710: capability information of the UE is received. The capability information is used for indicating a measurement relaxation capability of the UE.

The information processing method may be implemented in combination with the information processing method executed by the aforementioned network node, or may be implemented independently of the information processing method executed by the aforementioned network node.

For example, the capability information is used to determine the measurement relaxation parameter(s). The measurement relaxation parameter(s) determined by the network node may be sent to the UE, so that the UE may perform the measurement relaxation. For example, the capability information may also be used by the network node for determining the measurement relaxation parameter(s) from which the UE selects some measurement relaxation parameters, so that the UE may determine the measurement relaxation parameter(s) used by the measurement relaxation entered by the UE without reporting the measurement relaxation parameter(s) selected by itself based on the protocol.

In some embodiments, the capability information includes:
a first type of capability information, for uniformly indicating the measurement relaxation capability for all CGs of the UE;
a second type of capability information, for separately indicating the MCG-specific measurement relaxation capability of the UE and/or the SCG-specific measurement relaxation capability of the UE; or
a third type of capability information, for indicating an relationship between the MCG-specific measurement relaxation capability of the UE and the MCG-specific measurement relaxation capability of the UE.

One cell group may include at least one cell.

The first type of capability information will uniformly indicate the measurement relaxation capability for the MCG and the measurement relaxation capability for the SCG of the UE. At this time, when the first type of capability information indicates that the UE supports the measurement relaxation, it means that the UE supports the measurement relaxation on both the MCG and the SCG at the same time. When the first type of capability information indicates that the UE does not support the measurement relaxation, it means that the UE does not support the measurement relaxation on the MCG and the SCG at the same time.

The first type of capability information may be indicated by one bit, which has the characteristics of small bit overhead.

The second type of capability information is per CG or CG-distinct, separately indicating whether the UE supports the measurement relaxation for different CGs. For example, the second type of capability information includes: an indicator for indicating whether the UE supports the MCG measurement relaxation and/or an indicator for indicating whether the UE supports the SCG measurement relaxation. In an example, the second type of capability indication information may be set with two bits for each measurement, one bit is used to indicate whether the UE supports the relaxation of the measurement on the MCG, and the other bit is used to indicate whether the UE supports the relaxation of the measurement on the SCG.

The third type of capability information is an associated indication. For example, if the UE indicates or supports the RLM measurement relaxation on the MCG, and the UE must support the RLM measurement relaxation on the SCG, then this may be indicated by the third type of capability information. As another example, if the UE supports the BDF measurement relaxation on the SCG, then it may be considered that the UE must support the BDF measurement relaxation on the MCG.

In some embodiments, the capability information includes at least one of:
a first capability indicator, for indicating whether the UE supports an RLM measurement relaxation;
a second capability indicator, used for indicating whether the UE supports a BFD measurement relaxation; or
a third capability indicator, used for indicating whether the UE supports an RRM measurement relaxation.

The first capability indicator may consist of one or more bits, and different bit values of these bits represent two capability states that the UE supports the RLM measurement relaxation and the UE does not support the RLM measurement relaxation.

The second capability indicator may consist of one or more bits, and different bit values of these bits represent two capability states that the UE supports the BFD measurement relaxation and the UE does not support the BFD measurement relaxation.

The third capability indicator may consist of one or more bits, and different bit values of these bits represent two capability states that the UE supports the RRM measurement relaxation and that the UE does not support the RRM measurement relaxation.

In some embodiments, the capability information may include a field, and different bits of the field may respectively correspond to one or more of the first capability indicator, the second capability indicator and the third capability indicator.

In some embodiments, when there is an association between the measurement relaxation capabilities supported by the UE, two or three measurement relaxations supported by the UE among the RLM measurement relaxation, the BFD measurement relaxation, and the RRM measurement relaxation may be collectively indicated. For example, assuming that the UE supports the RRM measurement relaxation, it means that the UE also supports the RLM measurement relaxation synchronously. At this time, one indicator may be used to synchronously indicate whether the UE supports two measurement relaxations, thereby reducing the bit overhead.

In some embodiments, the step S710 may include:
in response to the network node being the MN node, receiving by the MN node the capability information of the UE through a configured SRB of the MN node;
   or
in response to the network node being the SN node and the SN node having a configured SRB, receiving by the SN node the capability information of the UE through a configured SRB of the SN node;
   or
in response to the network node being the MN node and the SN node having no configured SRB, receiving by the MN node an SRB containing the capability information from the UE through a configured SRB of the SN node, and at least partial capability information indicating the SCG-specific measurement relaxation capability of the UE is sent by the MN node to the SN node.

Generally, the MN node of the UE has a configured SRB for signaling transmission with the UE, but the SN node may not have a configured SRB for signaling transmission with the UE. At this time, the MCG-specific measurement relaxation capability of the UE and the SCG-specific measurement relaxation capability of the UE may all be sent to the MN node through the configured SRB of the MN node. In case of sending by the UE the second type of capability information that is the SCG-specific measurement relaxation capability, after the MN node receives this second type of capability information, the MN node may forward this second type of capability information to the SN node.

In some embodiments, sending the relevant information of the measurement relaxation to the UE includes at least one of:
in response to the network node being the MN node, sending the measurement relaxation parameter(s) for all CGs to the UE;
in response to the network node being the MN node, sending the MCG-specific measurement relaxation parameter(s) to the UE;
in response to the network node being the SN node and the SN node having a configured SRB, sending the SCG-specific measurement relaxation parameter(s) to the UE; or
in response to the network node being the MN node and the SN having no configured SRB, sending the SCG-specific measurement relaxation parameter(s) to the UE.

Here, the measurement relaxation parameter for all SGs is the measurement relaxation parameter for both the MCG and the SCG.

Generally, the MN node of the UE has a configured SRB for signaling transmission with the UE, but the SN node may not have a configured SRB for signaling transmission with the UE. Therefore, in some embodiments, regardless of whether the measurement relaxation parameters are for all CGs or only for the MCG or only for the SCG, the MN node may send the measurement relaxation parameters to the UE through the SRB configured by itself. If the SN node also has a configured SRB, the SN node may also send the measurement relaxation parameters to the UE through the SRB configured by itself.

In a word, in embodiments of the disclosure, the aforementioned relevant information and capability information may be transmitted through an RRC message corresponding to the SRB or User Assistance Information (UAI).

In some embodiments, the method also includes:
before the MN node sends the SCG-specific measurement relaxation parameter(s) to the UE, assistant information used for sending the SCG-specific measurement relaxation parameter(s) is received from the SN node.

The assistant information may be used by the MN node for determining the SCG-specific measurement relaxation parameter(s) and/or an occasion when to send the SCG-specific measurement relaxation parameter(s).

For example, the assistant information may directly be the SCG-specific measurement relaxation parameter(s) provided by the SN node and then the MN node may send the SCG-specific measurement relaxation parameter(s) received from the SN node to the UE, or the MN node may adjust properly the SCG-specific measure relaxation parameter(s) in combination with the MCG-specific measurement relaxation parameter(s) that is/are configured itself and then send the adjusted SCG-specific measure relaxation parameter(s) to the UE.

As another example, the assistant information may be one or more sets of SCG-specific measurement relaxation parameters selected by the SN node, among which the MN node selects and sends the SCG-specific measurement relaxation parameter(s) to the UE.

In some embodiments, the method also includes:
receiving measurement relaxation request information or a notification indicating that the measurement relaxation condition is met; in which the measurement relaxation request information is reported when the UE detects that the measurement relaxation condition is met.

Sending the relevant information of the measurement relaxation to the UE includes:
sending the measurement relaxation indication to the UE based on the measurement relaxation request information or the notification.

The network node may also receive the measurement relaxation request information that is sent by the UE when the UE detects that the current situation meets the measurement relaxation condition. At this time, the network node may determine whether to allow the UE to relax the measurement based on the communication requirements and/or network environment between the network side and the UE. If the network node allows the UE to relax the measurement, the network node sends an indication for indicating to allow or enable the UE to relax the measurement; otherwise, the network node sends an indication to prohibit or disable the UE to relax the measurement.

For example, the measurement relaxation indication includes one of:
an enabling indication, for enabling the UE measurement relaxation; or
a disabling indication, for disabling the UE measurement relaxation.

The measurement relaxation indication may include one bit, and two bit values of the bit may respectively correspond to the enabling indication or the disabling indication.

In some other embodiments, the measurement relaxation indication may only include an enabling indication. If the network node prohibits or disables the UE measurement relaxation, the network node may not return the enabling indication to the UE, so that the UE may not receive any enabling indication within a preset duration after sending the measurement relaxation request information, and then it is assumed by default that the network node does not allow the UE to relax the measurement.

In some other embodiments, the measurement relaxation indication may only include the disabling indication. If the network node allows the UE measurement relaxation, the network node will not send the disabling indication to the UE within the preset duration of receiving the measurement relaxation request information; otherwise the network node sends the disabling indication within the preset duration. In this way, if the UE receives the disabling indication within the preset duration, then the UE knows that the network node does not allow the UE to relax the measurement. If the UE does not receive the disabling instruction within the preset duration, the UE may assume that the network node allows the UE measurement relaxation by default and relax the radio signal measurement after the preset duration ends or relax the radio signal measure when it is detected again that the measurement relaxation condition is met.

In some embodiments, the measurement relaxation parameter(s) include(s) at least one of:
RLM measures relaxation parameter(s);
BFD measures relaxation parameter(s); or
RRM measures relaxation parameter(s).

For details of the RLM measurement relaxation parameter(s), the BFD measurement relaxation parameter(s) and the RRM measurement relaxation parameter(s), reference may be made to any of foregoing embodiments, which will not be repeated here.

In some embodiments, the measurement relaxation parameter(s) include(s):
a measurement relaxation criterion, for indicating measurement relaxation condition(s) of the UE; or
relaxation configuration(s), used for the measurement relaxation of the UE.

When the measurement relaxation parameter(s) is/are RLM measurement relaxation parameter(s), the RLM measurement relaxation parameter(s) may include:
an RLM measurement relaxation criterion, for indicating measurement relaxation condition(s) under which the UE relaxes an RLM measurement; or
RLM relaxation configuration(s), used by the UE for relaxing the RLM measurement.

When the measurement relaxation parameter(s) is/are RRM measurement relaxation parameter(s), the RRM measurement relaxation parameter(s) may include:
an RRM measurement relaxation criterion, for indicating measurement relaxation condition(s) under which the UE relaxes an RRM measurement; or
RRM relaxation configuration(s), used by the UE for relaxing the RRM measurement.

When the measurement relaxation parameter(s) is/are BFD measurement relaxation parameter(s), the BFD measurement relaxation parameter(s) may include:
a BFD measurement relaxation criterion, for indicating measurement relaxation condition(s) under which the UE relaxes a BFD measurement; or
BFD relaxation configuration(s), used by the UE for relaxing the BFD measurement.

In some embodiments, the measurement relaxation condition(s) include(s):
a first condition, i.e., a displacement of the UE within a preset duration being less than a first threshold, and/or a fluctuation of the radio signal quality measured by the UE within a second duration being less than a third threshold;
   or
a second condition, i.e., the radio signal quality measured by the UE within the second duration being greater than a second threshold.

For the first threshold to the third threshold used in the first condition and the second condition, the corresponding measurements may be the same or different. For example, the thresholds used in the first condition and/or the second condition for the RRM measurement may be different from the thresholds used in the first condition and/or the second condition for the RLM measurement.

It is noteworthy that, in some cases, the relevant configuration of the measurement relaxation condition(s) may be included in the measurement relaxation parameter(s), and in other cases, the relevant configuration of the measurement relaxation condition(s) may not be included in the measurement relaxation parameter(s). For example, the measurement relaxation condition(s) may be stipulated in the protocol, and the measurement relaxation configuration may be dynamically sent to the UE by the network node, so that the network node may provide the measurement relaxation configuration suitable for the current location of the UE based on the subscription data of the UE, the current radio environment and/or the configuration from the base station.

For example, satisfying the second condition includes at least one of:
the radio signal quality of the MCG measured by the UE within the second duration being greater than an MCG signal quality threshold, and/or the radio signal quality of the MCG measured by the UE within the second duration being greater than the MCG fluctuation threshold;
the radio signal quality of the SCG measured by the UE within the second duration being greater than an SCG signal quality threshold, and/or the radio signal quality of the SCG measured by the UE within the second duration being greater than an SCG fluctuation threshold; or
the radio signal quality of the MCG and/or the SCG measured by the UE within the second duration being greater than a common signal quality threshold, and/or the radio signal quality of the MCG and/or the SCG measured by the UE within the second duration being greater than a common fluctuation threshold.

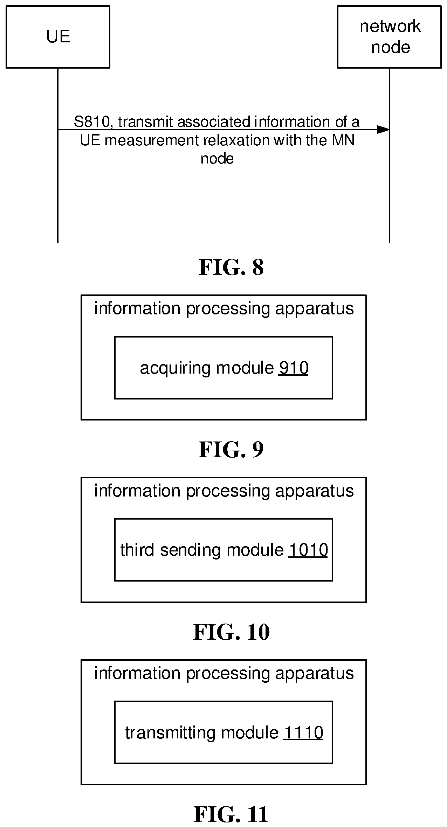

As illustrated in FIG. 8, embodiments of the disclosure provide an information processing method, performed by an SN node. The method includes the following.

At step S810, associated information of a UE measurement relaxation is transmitted with an MN node;
in which the associated information includes at least one of:
capability information, used for determining measurement relaxation parameter(s) of the UE,
a measurement relaxation indication, used for enabling or disabling the measurement relaxation;
SCG-specific measurement relaxation parameter(s); or
assistant information, used by the MN node for determining the SCG-specific measurement relaxation parameter(s) of the UE.

The information processing method is performed by the SN node of the dual connectivity UE.

The SN node may be SN nodes of various types of dual connectivity, such as SN node of MR-DC, SN node of EN-DC, SN node of NGEN-DC, SN node of NE-DC, or SN node of NR-DC.

The SN node configures an SRB for the dual connectivity UE, or does not configure any SRB. If the SN node does not configure an SRB for the dual connectivity UE, then the capability information exchanged between the SN node and the UE, the SCG-specific measurement relaxation parameter(s) and/or the measurement relaxation indication are all forwarded or transparently transmitted by the MN node.

If the SN node configures an SRB for the dual-connectivity UE, the SN node may exchange all or part of capability information, the SCG-specific measurement relaxation parameter(s) and/or the measurement relaxation indication with the UE. However, the part or all of the capability information, the SCG-specific measurement relaxation parameter(s) and/or the measurement relaxation indication may also be forwarded or transparently transmitted to the SN node through the MN node.

The MN node and the SN node connected by the dual connectivity UE will transmit one or more pieces of information associated with the UE measurement relaxation, and such information may be referred to as associated information.

The capability information may be information, for indicating whether the UE supports the measurement relaxation, reported by the UE to the MN node and sent by the MN node to the SN node.

The capability information received by the SN node may at least be the SCG-specific measurement relaxation capability of the UE.

For example, the capability information indicates the relaxation measurement supported by the UE and/or indicates the relaxation degree of the radio signal measurement supported by the UE, so that the network node may determine whether the UE supports the relaxation measurement of the radio signal and/or the relaxation degree when the UE supports the measurement relaxation of the radio signal.

In some embodiments, the reporting of the capability information of the UE may be used in combination with the methods illustrated in FIG. 2 above or may be used alone. For example, the capability information includes at least one of:
a first capability indicator, for indicating whether the UE supports an RLM measurement relaxation;
a second capability indicator, for indicating whether the UE supports a BFD measurement relaxation; or
a third capability indicator, for indicating whether the UE supports an RRM measurement relaxation.

The first capability indicator may consist of one or more bits, and different bit values of these bits represent two capability states that the UE supports the RLM measurement relaxation and the UE does not support the RLM measurement relaxation.

The second capability indicator may consist of one or more bits, and different bit values of these bits represent two capability states that the UE supports the BFD measurement relaxation and the UE does not support the BFD measurement relaxation.

The third capability indicator may consist of one or more bits, and different bit values of these bits represent two capability states that the UE supports the RRM measurement relaxation and that the UE does not support the RRM measurement relaxation.

In some embodiments, the capability information may include a field, and different bits of the field may respectively correspond to one or more of the first capability indicator, the second capability indicator and the third capability indicator.

In some embodiments, when there is an association between the measurement relaxation capabilities supported by the UE, two or three of measurement relaxations supported by the UE among the RLM measurement relaxation, the BFD measurement relaxation, and the RRM measurement relaxation may be collectively indicated. For example, assuming that the UE supports the RRM measurement relaxation, it means that the UE also supports the RLM measurement relaxation. At this time, one indicator may be used to synchronously indicate whether the UE supports two measurement relaxations, thereby reducing the bit overhead.

In some embodiments, the capability information includes:
a first type of capability information, for uniformly indicating the measurement relaxation capability for all Cell Groups (CGs) of the UE;
a second type of capability information, for separately indicating the MCG-specific measurement relaxation capability of the UE and/or the Second Cell Group (SCG)-specific measurement relaxation capability of the UE; or
a third type of capability information, for indicating an relationship between the MCG-specific measurement relaxation capability of the UE and SCG-specific measurement relaxation capability of the UE.

For a dual connectivity UE, the radio measurement performed by the UE may include: measurement of the primary cell and measurement of the secondary cell.

One cell group may include at least one cell.

The first type of capability information will uniformly indicate the measurement relaxation capability for both the MCG and the SCG of the UE. At this time, when the first type of capability information indicates that the UE supports the measurement relaxation, it means that the UE supports the measurement relaxation on both the MCG and the SCG at the same time. When the first type of capability information indicates that the UE does not support the measurement relaxation, it means that the UE does not support the measurement relaxation on the MCG and the SCG at the same time.

The first type of capability information may be indicated by one bit, which has the characteristics of small bit overhead.

The second type of capability information is per CG or CG-distinct, separately indicating whether the UE supports the measurement relaxation for different CGs. For example, the second type of capability information includes: an indicator indicating whether the UE supports the MCG measurement relaxation and/or an indicator indicating whether the UE supports the SCG measurement relaxation. For example, the second type of capability indication information may be set with two bits for each type of measurement, one bit is used to indicate whether the UE supports the relaxation of the measurement on the MCG, and the other bit is used to indicate whether the UE supports the relaxation of the measurement on the SCG.

The third type of capability information is an associated indication. For example, if the UE indicates or supports the RLM measurement relaxation on the MCG, and the UE must support the RLM measurement relaxation on the SCG, then this may be indicated by the third type of capability information. As another example, if the UE supports the BDF measurement relaxation on the SCG, then it may be considered that the UE must support the BDF measurement relaxation on the MCG.

The measurement relaxation indication sent by the SN node may at least include: the SCG-specific measurement relaxation indication of the UE. The measurement relaxation indication may include: an enabling indication used for enabling the UE to perform the SCG-specific measurement relaxation; and/or a disabling indication used for disabling the UE to perform the SCG-specific measurement relaxation.

The SCG-specific measurement relaxation parameter(s) may include:
an SCG-specific measurement relaxation criterion, used for indicating measurement relaxation condition(s) under which the measurement relaxation is performed;
   and/or
SCG-specific measurement relaxation configuration(s), used for a radio signal measurement relaxation of the UE.

The frequency of performing the SCG radio signal measurement that is based on the SCG-specific measurement relaxation configuration(s) is lower than the frequency of performing the measurement that is not based on the measurement relaxation configuration(s).

The SCG-specific measurement relaxation configuration(s) may include at least one of:
measurement stop parameter(s), used for instructing the UE to determine to stop the radio signal measurement of the SCG, for example the measurement stop parameter(s) may be used at least by the UE for determining the start and end time of stopping the radio signal measurement;
measurement period determination parameter(s) used for determining a measurement period after the frequency of measuring the radio signal of the SCG is reduced;
evaluation period determination parameter(s) used for determining an evaluation-reduced evaluation period after the SCG measurement relaxation; or
detection period determination parameter(s) used for determining a detection period-reduced detection period after the SCG measurement relaxation.

The measurement relaxation parameter(s) include(s) at least one of:
RLM measurement relaxation parameter(s);
BFD measurement relaxation parameter(s); or
RRM measurement relaxation parameter(s).

In some embodiments, the SCG-specific measurement relaxation parameter(s) cannot be determined by the SN node alone, and may need to be negotiated between the SN node and the MN node. At this time, the SN node may send assistant information to the MN node. The assistant information may include one or more sets of proposed configurations for the SCG-specific measurement relaxation parameter(s) provided by the SN node, such that the MN node may determine the SCG-specific measurement relaxation parameter(s) of the UE after receiving the one or more sets of proposed configurations for the SCG-specific measurement relaxation parameter(s).

In still some embodiments, the assistant information may further include: requirement information provided by the SN node for the UE to relax the radio signal measurement of the SCG. After the MN node receives the requirement information, the MN node specifies the SCG-specific measurement relaxation parameter(s) that meet the requirement information.

Certainly, the above are only examples of the assistant information, and specific implementation is not limited to above examples.

In some embodiments, transmitting, with the MN node, the associated information of the UE measurement relaxation includes:
in response to the SN node having no configured SRB, transmitting the association information of the UE measurement relaxation with the MN node.

If the SN node configures an SRB for the dual-connectivity UE, the SN node may directly transmit required information with the UE, thereby reducing the transmission load of the MN node. If the SN node does not configure SRB for the dual-connectivity UE, the MN node may be used to forward and/or transparently transmit the required information.

Embodiments of the disclosure provide a negotiation mechanism for the measurement relaxation in a dual connectivity scenario, which may specifically include:
providing a way of exchanging information between a network node and the UE, in which the network node is an MN node and/or an SN node;
if the UE is a 5G terminal, the network node being a gNB, for example, for an EN-DC UE, the network node being an SN node;
for the NE-DC UE, the network node being an MN node; and
for an NR-DC UE, the network node being an MN node and/or an SN node.

The information exchanged between the dual connectivity UE and the network node may be used for the RLM measurement relaxation, the BFD measurement relaxation and/or the RRM measurement relaxation.

The UE reports its own capability information to the MN node and/or the SN node. The capability information may at least indicate whether the UE supports the measurement relaxation.

For example, for the RLM measurement relaxation, the capability information reported by the UE may be as follows.

In one case, the capability information is not per CG or CG-distinct, and the UE reports one indication for indicating whether to support the RLM measurement relaxation. In this case, it means that the UE supports both the RLM measurement relaxation of the MCG and the RLM measurement relaxation of the SCG at the same time, or the UE does not support the RLM measurement relaxation of the MCG and the RLM measurement relaxation of the SCG at the same time. In another case, the capability information is per CG or CG-distinct, and the UE reports two mutually independent indications, one supporting the RLM measurement relaxation of the MCG and the other one supporting the RLM measurement relaxation of the SCG.

In another case, the UE reports one association indication that supports the RLM measurement relaxation of the MCG and/or the RLM measurement relaxation of the SCG. The association indication is used for notifying the network node of both the UE's capability of the MCG-specific RLM measurement relaxation and the UE's capability of the SCG-specific RLM measurement relaxation. For example, through the association indication, the UE may indicate that the UE supports the RLM measurement relaxation of the SCG but does not support the RLM measurement relaxation of the MCG, or the UE supports the RLM measurement relaxation of the MCG but does not support the RLM measurement relaxation of the SCG, or the UE supports the RLM measurement relaxation of the SCG and supports the RLM measurement relaxation of the MCG, or the UE does not support the RLM measurement relaxation of the SCG and does not support the RLM measurement relaxation of the MCG.

For example, for the BFD measurement relaxation, the capability information reported by the UE may be as follows.

In one case, the capability information is not per CG or CG-distinct, and the UE reports an association indication supporting the BFD measurement relaxation on the MCG and the BFD measurement relaxation on the SCG. In this case, the UE may support both the MCG-specific BFD measurement relaxation and the SCG-specific BFD measurement relaxation at the same time, or does not support the MCG-specific BFD measurement relaxation and the SCG-specific BFD measurement relaxation at the same time. In another case, the capability information is per CG or CG-distinct, and the UE reports indication(s) supporting the BFD measurement relaxation on the MCG and/or the BFD measurement relaxation on the SCG. At this time, the network node may also receive indications for indicating whether the UE supports MCG-specific BFD measurement relaxation and the SCG-specific BFD measurement relaxation respectively.

In another case, the UE reports one association indication that supports the BFD measurement relaxation of the MCG and/or the BFD measurement relaxation of the SCG. For example, through the association indication, the UE indicates that the UE supports the BFD measurement of the SCG but does not support the BFD measurement relaxation of the MCG, or the UE supports the BFD measurement relaxation of the MCG but does not support the BFD measurement relaxation of the SCG, the UE supports BFD measurement relaxation of the SCG and supports the BFD measurement relaxation of the MCG, or the UE does not support the BFD measurement relaxation of the SCG and does not support the BFD measurement relaxation of the MCG.

For example, for the RRM measurement relaxation, the capability information reported by the UE may be as follows.

In one case, the capability information is per CG or CG-distinct, and the UE reports one unified indication for indicating whether the UE supports the RRM measurement relaxation. In this case, the UE may support the RRM measurement relaxation of the MCG and the RRM measurement relaxation of the SCG at the same time, or the UE may not support the RRM measurement relaxation of the MCG and the RRM measurement relaxation of the SCG at the same time.

In another case, the capability information is per CG or CG-distinct, and the UE reports two independent indications supporting the RRM measurement relaxation on the MCG and/or the RRM measurement relaxation on the SCG. That is, the indication on whether the UE supports the RRM measurement relaxation of the MCG and the indication on whether the UE supports the RRM measurement relaxation of the SCG are reported separately.

In some other cases, the UE reports one association indication that supports the RRM measurement relaxation of the MCG and/or the RRM measurement relaxation of the SCG. Through the association indication, the UE indicates that the UE supports the RRM measurement relaxation of the SCG but does not support the RRM measurement relaxation of the MCG, or the UE supports the RRM measurement relaxation of the MCG but does not support the RRM measurement relaxation of the SCG, the UE supports the RRM measurement relaxation of the SCG and supports the RRM measurement relaxation of the MCG, or the UE does not support the RRM measurement relaxation of the SCG and does not support the RRM measurement relaxation of the MCG.

In detail, the capability information reported by the above UE may be as follows.

For the UE capability that is not per CG or CG-distinct, the UE capability is reported to the MN node or the SN node respectively.

For the EN-DC UE, the UE reports the capability information to the SN node or the MN node.

For the NE-DC UE, the UE reports the capability information to the MN node.

For the NR-DC UE, the UE reports the capability information to the MN node.

For the UE capability that is per CG or CG-distinct, and for the measurement relaxation capability of the MCG, the UE sends and reports the MCG-specific capability information to the MN node.

For the measurement relaxation capability of the SCG, the UE sends and reports the SCG-specific capability information to the enabled MN node or SN node. If the SCG-specific capability information is sent to the MN node, the MN node will forward or transparently transmit the SCG-specific capability information to the SN node.

For example, for an EN-DC UE, the measurement relaxation capability information of the SCG is reported to the SN node. For the NE-DC UE, the measurement relaxation capability information of the MCG is sent to the MN node.

For the NR-DC UE, the measurement relaxation capability of the MCG is sent to the MN node and/or the measurement relaxation capability information of the SCG is sent to the SN node.

The capability information sent to the MN node may be reported through SRB1.

To report the capability information to the SN node and the SN node has a configured SRB3, the SRB3 may be used for reporting. If the SN node does not have the configured SRB3, the capability information is sent to the MN node through the SRB 1, and then the MN node will pass the capability information to the SN node.

The MN node and/or the SN node may send the RLM measurement relaxation parameter(s), the BFD measurement relaxation parameter(s) and/or the RRM measurement relaxation parameter(s) to the UE.

The RLM measurement relaxation parameter(s) may include at least one of:
configuration(s) of an RLM measurement relaxation criterion; or
an RLM measurement relaxation enabling/disabling indication.

In some embodiments, the RLM measurement relaxation enabling/disabling indication may be implicitly indicated by whether the network node sends other content of the RLM measurement relaxation parameter(s). For example, if the network node sends other content of the RLM measurement relaxation parameter(s) (e.g., the other content may include RLM measurement relaxation criteria and/or RLM measurement relaxation configuration), then it indicates that the network node allows the UE to relax the RLM measurement; otherwise, it may be considered that the network node does not allow the UE to relax the RLM Measurement.

The BFD measurement relaxation parameter(s) may include at least one of:
a BFD measurement relaxation criterion; or
a BFD measurement relaxation enabling/disabling indication. In some embodiments, the BFD measurement relaxation enabling/disabling indication may be implicitly indicated by whether the network node sends other content of the BFD measurement relaxation parameter(s). For example, if the network node sends other content of the BFD measurement relaxation parameter(s) (e.g., the other content may include BFD measurement relaxation criteria and/or BFD measurement relaxation configuration), then it indicates that the network node allows the UE to relax the BFD measurement; otherwise, it may be considered that the network node does not allow the UE to relax the BFD measurement.

The RRM measures relaxation parameter(s) may include at least one of:
an RRM measurement relaxation criteria; or
an RRM measurement relaxation enabling/disabling indication. In some embodiments, the RRM measurement relaxation enabling/disabling indication may be implicitly indicated by whether the network node sends other content of the RRM measurement relaxation parameter(s). For example, if the network node sends other content of RRM measurement relaxation parameter(s) (e.g., the other content may include RRM measurement relaxation criteria and/or RRM measurement relaxation configuration), it indicates that the network node allows the UE to relax the RRM measurement; otherwise, it may be considered that the network node does not allow the UE to relax the RRM measurement.

In an embodiment, the measurement relaxation parameter(s) may be divided into:
common parameters for the MCG and the SCG, that is, the parameters are not per CG or CG-distinct, i.e., the parameters are configured on the UE granularity, such as in an embodiment the mobility decision criteria in the RLM measurement relaxation parameter(s) / the BFD measurement relaxation parameter(s) / the RRM measurement relaxation parameter(s) and the mobility decision criterion may be: at least the measurement relaxation conditions of the aforementioned first condition.

MCG-specific measurement relaxation parameter(s), for the NE-DC scenarios, only the MCG-specific measurement relaxation parameter(s) may be configured, such as in an embodiment, a good signal quality criterion in the RLM measurement relaxation parameter(s) / the BFD measurement relaxation parameter(s) / the RRM measurement relaxation parameter(s), and the good signal quality criterion may be all or part of the measurement relaxation conditions of the aforementioned second condition.

SCG-specific measurement relaxation parameter(s), for the EN-DC scenario, only the SCG-specific measurement relaxation parameter(s) may be configured, such as in an embodiment, the mobility decision criteria in the RLM measurement relaxation parameter(s), the BFD measurement relaxation parameter(s), or the RRM measurement relaxation parameter(s).

The measurement relaxation parameter(s) may be sent as follows.

The common measurement relaxation parameter(s) for the MCG and the SCG may be sent to the UE through the MN node. For example, the common measurement relaxation parameter(s) may be sent to the UE through the configured SRB 1 of the MN node. The common measurement relaxation parameter(s) here may be measurement relaxation parameter(s) for both the MCG and the SCG at the same time. The common measurement relaxation parameter(s) may also be sent to the UE through the SN node. For example, the common measurement relaxation parameter(s) may be sent to the UE through the configured SRB3 of the SN node.

The MCG-specific measurement relaxation parameter(s) and/or the SCG-specific measurement relaxation parameter(s) are sent in the following ways.

Way 1: The MN node and the SN node are responsible for the MCG-specific measurement relaxation parameter(s) and/or the SCG-specific measurement relaxation parameter(s) of respective nodes.

The MCG-specific measurement relaxation parameter(s) is/are sent to the UE through the MN node. For example, the MN node sends the MCG-specific measurement relaxation parameter(s) for the MCG measurement relaxation to the UE through the SRB1.

The SCG-specific measurement relaxation parameter is/are delivered to the UE through the SN node. For example, the SN node sends the SCG-specific measurement relaxation parameter(s) for the SCG measurement relaxation to the UE through the SRB3. In this case, the SN node has the configured SRB3. If the SN node does not have the configured SRB3, the SN node may first transmit the SCG-specific measurement relaxation parameter(s) to the MN node, and then the MN node sends the SCG-specific measurement relaxation parameter(s) to the UE through the SRB1.

After the MN node obtains the SCG-specific measurement relaxation parameter(s), the MN node may transparently transmit the SCG-specific measurement relaxation parameter(s) to the UE, or the MN node may analyze and modify the SCG-specific measurement relaxation parameter(s) before sending them to the UE.

The MN node notifies the SN node of the assistant information, which is used for the SN node to issue the SCG-specific measurement relaxation parameter(s).

Way 2: The MN node is responsible for delivering the measurement relaxation parameter(s) of the MN node and/or SN node.

The MCG-specific measurement relaxation parameter(s) is/are delivered to the UE through the MN node. For example, the MN node may send the MCG-specific measurement relaxation parameter(s) to the UE by using the SRB1.

The MN node may acquire the assistant information provided by the SN node. The SN node provides the assistant information to the MN node. After the MN node obtains the assistant information of the SN node and makes a decision, the MN node may transparently transmit the SCG-specific measurement relaxation parameter(s) to the UE, or modify by itself the measurement relaxation parameter(s) of the SN node and send it to the UE; and notify the UE of the SCG-specific measurement relaxation parameter(s) together with the MCG-specific measurement relaxation parameter(s).

The measurement relaxation parameter(s) is/are issued in the following ways.

For the EN-DC UE, the SN node or the MN node delivers the measurement relaxation parameter(s).

For the NE-DC UE, the MN node delivers the measurement relaxation parameter(s).

For the NR-DC UE, the MN node delivers the measurement relaxation parameter(s).

The measurement relaxation parameter(s) is/are delivered to the UE through the MN node. The MN node may use the SRB 1 to send the measurement relaxation parameter(s) to the UE.

If the SN node is configured with the SRB3. The measurement relaxation parameter(s) is/are delivered to the UE through the SN node, in which the SN node uses the SRB3 to send the measurement relaxation parameter(s) to the UE.

If the SN node is not configured with the SRB3, the measurement relaxation parameter(s) is/are first transmitted to the MN node, and then sent to the UE through the SRB1 by the MN node.

Information that the UE meets the relaxation condition(s) or leaves the relaxation condition(s) and will report to the MN node and/or SN node.

For the EN-DC UE, the UE reports to the SN node or the MN node, the measurement relaxation request information or a notification for indicating that the measurement relaxation condition(s) is/are satisfied. The measurement relaxation request information may be reported when the UE detects that the measurement relaxation condition(s) is/are satisfied.

For the NE-DC UE, the UE reports to the MN node the measurement relaxation request information or the notification for indicating that the measurement relaxation condition(s) is/are satisfied

For the NR-DC UE, the UE reports, to a network element (i.e., the network node) based on the MCG or SCG relaxation criteria, the measurement relaxation request information or the notification for indicating that the measurement relaxation condition(s) is/are satisfied

In reporting the measurement relaxation request information or the notification for indicating that the measurement relaxation condition(s) is/are satisfied to the MN node, the UE may use the SRB 1 to send the measurement relaxation request information to the MN node.

If the SN node is configured with the SRB3, in reporting the measurement relaxation request information or the notification for indicating that the measurement relaxation condition(s) is/are met to the SN node, the UE may use the SRB3 to send the measurement relaxation request information to the SN node.

If the SN node is not configured with the SRB3, in reporting the measurement relaxation request information or the notification for indicating that the measurement relaxation condition(s) is/are satisfied to the MN node, the UE may use the SRB 1 to send the measurement relaxation request information or the notification for indicating that the measurement relaxation condition(s) is/are satisfied to the MN node, and then the MN node forwards them to the SN node.

When the UE meets the relaxation condition(s) or leaves the relaxation condition(s), the measurement relaxation request information may be reported by means of a measurement report or a UAI signaling.

When the RRM measurement relaxation condition(s) is/are met, that is, the UE satisfies the stationary condition, the UE leaves the relaxation condition(s), that is, the stationary condition does not meet the measurement relaxation condition(s) any more.

When the RLM/BFD measurement relaxation condition(s) is/are satisfied, that is, the UE meets the stationary condition and/or the signal quality is good enough, the UE leaves the relaxation condition(s), that is, the stationary and/or the signal quality being good enough does not meet the measurement relaxation condition(s) any more.

As illustrated in FIG. 9, embodiments of the disclosure provide an information processing apparatus. The apparatus includes: an acquiring module 910.

The acquiring module 910 is configured to acquire measurement relaxation parameter(s); in which the measurement relaxation parameter(s) is/are used for the UE to relax a measurement of a wireless signal transmitted by a network node;
in which the network node includes:
an MN node;
and/or
an SN node.

The information processing apparatus may be included in the UE. The UE may be various UEs supporting the dual connectivity.

In some embodiments, the acquiring module 910 may be a program module, and after the program module is executed by the processor, the processor may perform the above-mentioned acquisition of the measurement relaxation parameter(s).

In some embodiments, the acquiring module 910 may be a combination of hardware and software modules, and the combination of hardware and software modules may include various programmable arrays. The programmable arrays include, but are not limited to, field programmable arrays and/or complex programmable arrays.

In still some embodiments, the acquiring module 910 may be a pure hardware module, and the pure hardware module may include various application-specific integrated circuits.

In some embodiments, the acquiring module 910 is configured to receive the measurement relaxation parameter(s) sent by the network node or determine the measurement relaxation parameter(s) based on a protocol.

In some embodiments, the UE adopts an E-UTRAN-NR dual connectivity, and the network node include an SN node of the E-UTRAN-NR dual connectivity;
or
the UE adopts the NG-RAN-UTRA-NR dual connectivity, and the network node include an SN node of NG-RAN-UTRA-NR dual connectivity;
   or
the UE adopts an NR-E-UTRA dual connectivity and the network node include an MN node of the NR-E-UTRA dual connectivity;
   or
the UE adopts an NR-NR dual connectivity, and the network node includes an MN node of the NR-NR dual connectivity and/or an SN node of the NR-NR dual connectivity.

In some embodiments, the measurement relaxation parameter(s) include at least one of:
RLM measurement relaxation parameter(s);
BFD measurement relaxation parameter(s); or
RRM measurement relaxation parameter(s).

In some embodiments, the apparatus also includes:
a first relaxing module, configured to send capability information of the UE to the network node, in which the capability information is used by the network node to determine the measurement relaxation parameter(s).

In some embodiments, the capability information includes at least one of:
a first capability indicator, used for indicating whether the UE supports the RLM measurement relaxation;
a second capability indicator, used for indicating whether the UE supports the BFD measurement relaxation;
a third capability indicator, used for indicating whether the UE supports the RRM measurement relaxation.

In some embodiments, the capability information includes:
a first type of capability information, used for uniformly indicating the measurement relaxation capability for all CGs of the UE;
a second type of capability information, used for separately indicating an MCG-specific measurement relaxation capability of the UE and/or an SCG-specific measurement relaxation capability of the UE; or
a third type of capability information, used for indicating a relationship between the MCG-specific measurement relaxation capability of the UE and the SCG-specific measurement relaxation capability of the UE.

In some embodiments, the first sending module is configured to perform at least one of:
in response to the UE adopting the EN-DC dual connectivity, sending the first type of capability information of the UE to the SN node or MN node of the EN-DC dual connectivity;
in response to the UE adopting the NE-DC dual connectivity, sending the first type of capability information of the UE to the MN node of the NE-DC dual connectivity;
in response to the UE adopting the NR-DC dual connectivity, sending the first type of capability information of the UE to the MN node of the NR-DC dual connectivity.

In some embodiments, the first sending module is configured to perform one of:
sending, to the MN node, the second type of capability information that separately indicates the MCG-specific measurement relaxation capability of the UE; or
sending, to the SN node, the second type of capability information that separately indicates the SCG-specific measurement relaxation capability of the UE.

In some embodiments, the first sending module is configured to perform at least one of:
sending the capability information to the MN node through the SRB of the MN node;
in response to the SN node being configured with an SRB, sending the capability information to the SN node through the SRB of the SN node; or
in response to the SN node not being configured with an SRB, sending the capability information to the MN node through an SRB of the MN, in which the capability information is forwarded by the MN node to the SN node.

In some embodiments, the measurement relaxation parameter(s) include(s): a measurement relaxation criterion for indicating measurement relaxation condition(s); and the apparatus includes:
a second sending module, configured to, in response to detecting that the measurement relaxation condition(s) is/are satisfied, send measurement relaxation request information to the network node or send a notification for indicating that the measurement relaxation condition(s) is/are satisfied to the network node; in which the measurement relaxation request information is used for triggering the network node to determine whether to allow the UE measurement relaxation.

In some embodiments, the apparatus also includes:
a first receiving module, configured to receive a measurement relaxation indication returned based on the measurement relaxation request information or the notification; and
a measuring module, configured to measure the radio signal based on relaxation configuration of the measurement relaxation parameter(s) in response to the measurement relaxation indication allows the UE measurement relaxation.

In some embodiments, the measurement relaxation indication includes one of:
an enabling indication, used for enabling the UE measurement relaxation; or
a disabling indication, used for disabling the UE measurement relaxation.

In some embodiments, satisfying the measurement relaxation condition(s) includes:
satisfying a first condition, including a displacement of the UE within a preset duration being less than a first threshold, and/or a fluctuation value of a radio signal quality measured by the UE being less than a third threshold;
   or
satisfying a second condition, including the radio signal quality measured by the UE being greater than a second threshold.

In some embodiments, the second sending module is configured to, in response to detecting that the measurement relaxation condition(s) is/are satisfied, send the measurement relaxation request information or the notification for indicating that the measurement relaxation condition(s) is/are satisfied to the network node through the SRB of the network node.

In some embodiments, the measurement relaxation parameter(s) include(s):
a first type of relaxed configuration, being a unified measurement relaxation configuration for all CGs; or
a second type of relaxation configuration, being an MCG-specific measurement relaxation configuration and/or an SCG-specific measurement relaxation configuration.

In some embodiments, the acquiring module 910 is configured to perform at least one of:
receiving the first type of relaxation configuration sent by the MN node;
   or
receiving the second type of relaxation configuration for the MCG sent by the MN node, and/or receiving the second type of relaxation configuration for the SCG sent by the SN node;
   or
receiving the second type of relaxation measurement configuration for the MCG sent by the MN node, and/or receive the second type of relaxed configuration for the SCG sent by the MN node.

As illustrated in FIG. 10, embodiments of the disclosure provides an information processing apparatus. The apparatus includes a third sending module 1010.

The third sending module 1010 is configured to send relevant information of a measurement relaxation to a UE;
in which the relevant information includes at least one of:
measurement relaxation parameter(s) used for the measurement relaxation of the UE; or
a measurement relaxation indication, used for enabling or disabling the measurement relaxation of the UE.

In some embodiments, the third sending module 1010 may be a program module, and after the program module is executed by the processor, the processor may perform the sending of the relevant information.

In some embodiments, the third sending module 1010 may be a combination of hardware and software, and the combination of hardware and software may include various programmable arrays. The programmable arrays include, but are not limited to, field programmable arrays and/or or complex programmable arrays.

In still some embodiments, the third sending module 1010 may be a pure hardware module, and the pure hardware module may include various application-specific integrated circuits.

In some embodiments, the apparatus also includes:
a second receiving module, configured to receive capability information of the UE; in which the capability information is used for determining measurement relaxation parameter(s).

In some embodiments, the capability information includes:
a first type of capability information, used for uniformly indicating the measurement relaxation capability for all CGs of the UE;
a second type of capability information, used for separately indicating the MCG-specific measurement relaxation capability of the UE and/or the SCG-specific measurement relaxation capability of the UE separately; or
a third type of capability information, used for indicating an relationship between the MCG-specific measurement relaxation capability of the UE and the SCG-specific measurement relaxation capability of the UE.

In some embodiments, the capability information includes at least one of:
a first capability indicator, used for indicating whether the UE supports an RLM measurement relaxation;
a second capability indicator, used for indicating whether the UE supports a BFD measurement relaxation; or
a third capability indicator, used for indicating whether the UE supports am RRM measurement relaxation.

In some embodiments, the second receiving module is configured to perform one of:
in response to the network node being the MN node, receiving by the MN node the capability information of the UE on an SRB configured by the MN node;
   or
in response to the network node being the SN node and the SN node having a configured SRB, receiving by the SN node the capability information of the UE on the SRB configured by the SN node;
   or
in response to the network node being the MN node and the SN node having no configured SRB, receiving by the MN node an SRB containing the capability information from the UE on the SRB configured by the SN node, in which at least partial capability information indicating the SCG-specific measurement relaxation capability of the UE is sent by the MN node to the SN node.

In some embodiments, the third sending module 1010 is configured to perform at least one of:
in response to the network node being the MN node, sending the measurement relaxation parameter(s) for all CGs to the UE;
in response to the network node being the MN node, sending the MCG-specific measurement relaxation parameter(s) to the UE;
in response to the network node being the SN node and the SN node having a configured SRB, sending the SCG-specific measurement relaxation parameter(s) to the UE; or
in response to the network node being the MN node and the SN node having no configured SRB, sending the SCG-specific measurement relaxation parameter(s) to the UE.

In some embodiments, the apparatus further includes:
a third receiving module, configured to receive, from the SN node, assistant information used for sending the SCG-specific measurement relaxation parameter(s) before the MN node sends the SCG-specific measurement relaxation parameter(s) to the UE.

In some embodiments, the apparatus further includes:
receiving measurement relaxation request information or a notification for indicating that the measurement relaxation condition(s) is/are met; in which the measurement relaxation request information is reported when the UE detects that the measurement relaxation condition(s) is/are met; and
sending the relevant information of the measurement relaxation to the UE includes:
sending a measurement relaxation indication to the UE based on the measurement relaxation request information or the notification.

In some embodiments, the measurement relaxation indication includes one of:
an enabling indication, used for enabling the UE measurement relaxation; or
a disabling indication, used for disabling the UE measurement relaxation.

In some embodiments, the measurement relaxation parameter(s) include(s) at least one of:
RLM measurement relaxation parameter(s);
BFD measures relaxation parameter(s); or
RRM measurement relaxation parameter(s).

In some embodiments, the measurement relaxation parameter(s) include(s):
a measurement relaxation criterion, for indicating measurement relaxation condition(s) of the UE; or
a relaxation configuration, used for the measurement relaxation of the UE.

In some embodiments, the measurement relaxation condition(s) include(s):
a first condition, including a displacement of the UE within a preset duration being less than a first threshold, and/or a fluctuation value of a radio signal quality measured by the UE within a second duration being less than a third threshold;
   or
a second condition, including a radio signal quality measured by the UE within a second duration being greater than a second threshold.

As illustrated in FIG. 11, embodiments of the disclosure provide an information processing apparatus. The apparatus includes a transmitting module 1110.

The transmitting module 1110 is configured to transmit associated information of a UE measurement relaxation with an MN node;
in which the associated information includes at least one of:
capability information, used for determining measurement relaxation parameter(s) of the UE;
a measurement relaxation indication, used for enabling or disabling the measurement relaxation of the UE;
SCG-specific measurement relaxation parameter(s); or
assistant information, used for the MN node to determine the SCG-specific measurement relaxation parameter(s) of the UE.

In some embodiments, the transmitting module 1110 may be a program module, and after the program module is executed by the processor, the processor may be perform the transmission of the associated information.

In some embodiments, the transmitting module 1110 may be a combination of hardware and software modules, and the combination of hardware and software modules may include various programmable arrays. The programmable arrays include, but are not limited to, field programmable arrays and/or complex programmable arrays.

In still some embodiments, the transmitting module 1110 may be a pure hardware module, and the pure hardware module may include various application-specific integrated circuits.

In some embodiments, the transmitting module 1110 is configured to transmit the associated information of the UE measurement relaxation with the MN node in response to the SN node having no configured SRB.

Embodiments of the disclosure provide a communication device. The communication device includes:
a memory for storing instructions executable by a processor; and;
a processor, connected to the memory;
in which the processor is configured to execute the information processing method according to any of aforementioned technical solutions.

The processor may include various types of storage media, which are non-transitory computer storage media, and may continue to memorize and store information thereon after the communication device is powered off.

Here, the communication device includes: an access device, a UE or a core network device.

The processor may be connected to the memory through a bus, etc., for reading an executable program stored on the memory, such as at least one of the information processing methods illustrated in FIGS. 2 to 8.

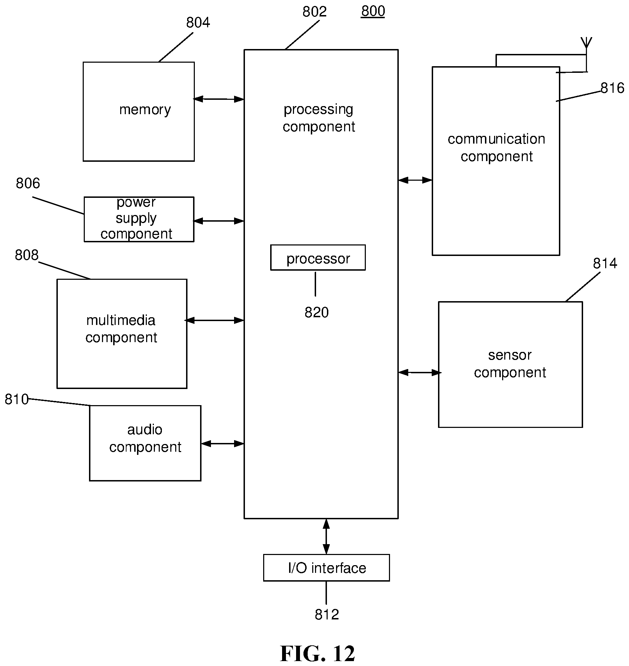

FIG. 12 is a block diagram illustrating a UE 800 according to an exemplary embodiment. For example, the UE 800 may be a mobile phone, a computer, a digital broadcast UE, a messaging device, a game console, a tablet device, a medical device, a fitness device, a personal digital assistant, or the like.

As illustrated in FIG. 12, the UE 800 may include one or more of: a processing component 802, a memory 804, a power supply component 806, a multimedia component 808, an audio component 810, an input/output (I/O) interface 812, a sensor component 814, and a communication component 816.

The processing component 802 generally controls the overall operations of the UE 800, such as those associated with display, phone calls, data communications, camera operations, and recording operations. The processing component 802 may include one or more processors 820 to execute instructions to complete all or part of steps of above methods. Additionally, the processing component 802 may include one or more modules that facilitate interaction between the processing component 802 and other components. For example, the processing component 802 may include a multimedia module to facilitate the interaction between the multimedia component 808 and the processing component 802.

The memory 804 is configured to store various types of data to support operations at the UE 800. Examples of such data include instructions for operating any application or method on the UE 800, contact data, phonebook data, messages, pictures, videos, etc. The memory 804 may be implemented by any type of volatile or non-volatile storage device or their combination, such as Static Random Access Memory (SRAM), Electrically Erasable Programmable Read-Only Memory (EEPROM), Erasable Programmable Read Only Memory (EPROM), Programmable Read Only Memory (PROM), Read Only Memory (ROM), Magnetic Memory, Flash Memory, Magnetic or Optical Disk.

The power supply component 806 provides power to various components of the UE 800. The power supply component 806 may include a power management system, one or more power supplies, and other components associated with generating, managing, and distributing power for the UE 800.

The multimedia component 808 includes a screen providing an output interface between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect a duration and a pressure associated with the touch or swipe action. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each front-facing camera and rear-facing camera may be a fixed optical lens system or have the focal length and optical zoom capability.

The audio component 810 is configured to output and/or input audio signals. For example, the audio component 810 includes a microphone (MIC), which is configured to receive an external audio signal when the UE 800 is in an operation mode, such as a call mode, a recording mode, and a voice recognition mode. The received audio signals may be further stored in memory 804 or sent via the communication component 816. In some embodiments, the audio component 810 also includes a speaker for outputting the audio signals.

The I/O interface 812 provides an interface between the processing component 802 and a peripheral interface module, which may be a keyboard, a click wheel, a button, and the like. These buttons may include, but are not limited to, a home button, volume buttons, start button, and lock button.

The sensor component 814 includes one or more sensors for providing various aspects of status assessment for the UE 800. For example, the sensor component 814 may detect the open/closed state of the UE 800, the relative positioning of components, such as the display and the keypad of the UE 800. The sensor component 814 may also detect the position change of the UE 800 or a component of the UE 800, the presence or absence of the contact with the UE 800, the orientation or acceleration/deceleration and temperature change of the UE 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communications between the UE 800 and other devices. The UE 800 may access the radio networks based on communication standards, such as WiFi, 2G or 3G, or their combination. In an embodiment, the communication component 816 receives broadcast signals or broadcast-related information from an external broadcast management system via a broadcast channel. In an embodiment, the communication component 816 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology or other technologies.

In an embodiment, the UE 800 may be realized by one or more Application Specific Integrated Circuits (ASICs), Digital Signal Processors (DSPs), Digital Signal Processing Devices (DSPDs), Programmable Logic Devices (PLDs), Field Programmable Gates Arrays (FPGAs), controllers, microcontrollers, microprocessors or other electronics for performing the methods described above.

In an embodiment, there is also provided a non-transitory computer-readable storage medium including instructions, such as the memory 804 including instructions, which may be performed by the processor 820 of the UE 800 to realize above methods. For example, the non-transitory computer readable storage medium may be a ROM, a random access memory (RAM), a CD-ROM, a magnetic tape, a floppy disk, an optical data storage device, or the like.

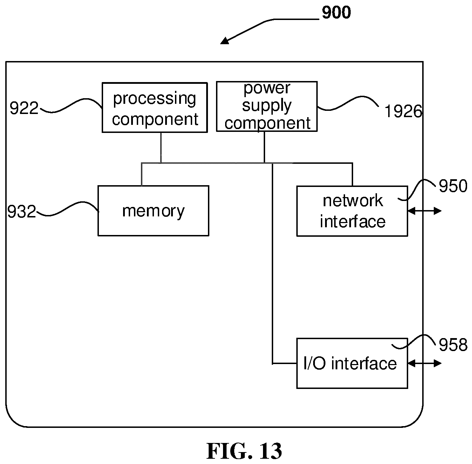

As illustrated in FIG. 13, embodiments of the disclosure illustrate a structure of an access device. For example, the network node 900 may be provided as a network side device. The communication device may be the above-aforementioned access device and/or core network device.

As illustrated in FIG. 13, the network node 900 includes a processing component 922, which includes one or more processors, and a memory resource, represented by memory 932 for storing instructions executable by the processing component 922, such as an application program. The application program stored in the memory 932 may include one or more modules each corresponding to a set of instructions. In addition, the processing component 922 is configured to execute instructions to execute above information processing methods performed by the network node, such as at least one of the information processing methods illustrated in FIG. 2 to FIG. 8.

The network node 900 may also include a power supply component 926 configured to perform power management of the network node 900, a wired or wireless network interface 950 configured to connect the network node 900 to a network, and an input output (I/O) interface 958. The network node 900 may operate based on an operating system stored in the memory 932, such as Windows Server^{™}, Mac OS X^{™}, Unix^{™}, Linux^{™}, FreeBSD^{™} or the like.

Other embodiments of the disclosure will be readily apparent to those skilled in the art from consideration of the specification and practice of the disclosure herein. This disclosure is intended to cover any modification, use or adaptation of the disclosure, and these modifications, uses or adaptations follow the general principles of the disclosure and include common knowledge or conventional technical means in the technical field not disclosed in the disclosure . The specification and examples are to be considered exemplary only, with a true scope and spirit of the disclosure being indicated by the following claims.

It is understandable that the disclosure is not limited to the precise constructions which have been described above and shown in the accompanying drawings, and various modifications and changes may be made without departing from the scope thereof. The scope of the invention is limited only by the appended claims.

## Claims

1. An information processing method, performed by a User Equipment (UE), comprising:
acquiring a measurement relaxation parameter; wherein the measurement relaxation parameter is used by the UE for relaxing a measurement of a radio signal transmitted by a network node;
wherein the network node comprises:
a Master Network (MN) node;
and/or
a Secondary Network (SN) node.

2. The method of claim 1, wherein acquiring the measurement relaxation parameter comprises:
receiving the measurement relaxation parameter sent by the network node; or
determining the measurement relaxation parameter based on a protocol.

3. The method of claim 1 or 2, wherein
the UE adopts an Evolution Universal mobile telecommunications system Terrestrial Radio Access Network-New Radio (E-UTRAN-NR) dual connectivity, and the network node comprises the SN node of the E-UTRAN-NR dual connectivity;
or
the UE adopts a Next Generation Radio Access Network-Universal mobile telecommunications system Terrestrial Radio Access-New Radio (NG-RAN-UTRA-NR) dual connectivity, and the network node comprises the SN node of the NG-RAN-UTRA-NR dual connectivity;
or
the UE adopts a New Radio-Evolution Universal mobile telecommunications system Terrestrial Radio Access Network (NR-E-UTRA) dual connectivity, and the network node comprises the MN node of the NR-E-UTRA dual connectivity;
or
the UE adopts a New Radio-New Radio (NR-NR) dual connectivity, and the network node comprises the MN node of the NR-NR dual connectivity and/or the SN node of the NR-NR dual connectivity.

4. The method of any one of claims 1 to 3, wherein the measurement relaxation parameter comprises at least one of:
a Radio Link Monitoring (RLM) measurement relaxation parameter;
a Beam Failure Detection (BFD) measurement relaxation parameter; or
a Radio Resource Management (RRM) measurement relaxation parameter.

5. The method of any one of claims 1 to 4, further comprising:
sending capability information of the UE to the network node, wherein the capability information is used by the network node for determining the measurement relaxation parameter.

6. The method of claim 5, wherein the capability information comprises at least one of:
a first capability indicator, for indicating whether the UE supports a Radio Link Monitoring (RLM) measurement relaxation;
a second capability indicator, for indicating whether the UE supports a Beam Failure Detection (BFD) measurement relaxation; or
a third capability indicator, for indicating whether the UE supports a Radio Resource Management (RRM) measurement relaxation.

7. The method of claim 5 or 6, wherein the capability information comprises:
a first type of capability information, for uniformly indicating a measurement relaxation capability for all Cell Groups (CGs) of the UE;
a second type of capability information, for separately indicating a Master Cell Group (MCG)-specific measurement relaxation capability of the UE and/or a Secondary Cell Group (SCG)-specific measurement relaxation capability of the UE; or
a third type of capability information, for indicating an relationship between the MCG-specific measurement relaxation capability of the UE and the SCG-specific measurement relaxation capability of the UE.

8. The method of claim 7, wherein sending the capability information of the UE to the network node comprises at least one of:
in response to the UE adopting an Evolution Universal mobile telecommunications system Terrestrial Radio Access Network-New Radio (E-UTRAN-NR) Dual Connectivity (EN-DC), sending the first type of capability information of the UE to the SN node or MN node of the EN-DC;
in response to the UE adopting a New Radio-Evolution Universal mobile telecommunications system Terrestrial Radio Access Network (NR-E-UTRA) Dual Connectivity (NE-DC), sending the first type of capability information of the UE to the MN node of the NE-DC; or
in response to the UE adopting a New Radio-New Radio (NR-NR) Dual Connectivity (NR-DC), sending the first type of capability information of the UE to the MN node of the NR-DC.

9. The method of claim 7, wherein sending the capability information of the UE to the network node comprises at least one of:
sending, to the MN node, the second type of capability information that separately indicates the MCG-specific measurement relaxation capability of the UE; or
sending, to the SN node, the second type of capability information that separately indicates the SCG-specific measurement relaxation capability of the UE.

10. The method of any one of claims 5 to 9, wherein sending the capability information of the UE to the network node comprises at least one of:
sending the capability information to the MN node through a Signaling Radio Bearer (SRB) of the MN node;
in response to the SN node having a configured SRB, sending the capability information to the SN node through the SRB of the SN node; or
in response to the SN node having no configured SRB, sending the capability information to the MN node through an SRB of the MN node, wherein the capability information is forwarded by the MN node to the SN node.

11. The method of any one of claims 1 to 10, wherein the measurement relaxation parameter comprises: a measurement relaxation criterion for indicating a measurement relaxation condition; wherein the method comprises:
in response to detecting that the measurement relaxation condition is satisfied, sending measurement relaxation request information to the network node or sending a notification for indicating that the measurement relaxation condition is satisfied to the network node; wherein the measurement relaxation request information is used for triggering the network node to determine whether to allow the UE to relax the measurement.

12. The method of claim 11, further comprising:
receiving a measurement relaxation indication returned based on the measurement relaxation request information or the notification; and
in response to the measurement relaxation indication indicating to allow the UE to relax the measurement, measuring the radio signal based on a relaxation configuration in the measurement relaxation parameter.

13. The method of claim 12, wherein the measurement relaxation indication comprises one of:
an enabling indication, for enabling the UE to relax the measurement; or
a disabling indication, for disabling the UE to relax the measurement.

14. The method of claim 12, wherein the measurement relaxation condition being satisfied comprises:
a first condition being satisfied, comprising a displacement of the UE within a preset duration being less than a first threshold, and/or a fluctuation value of a radio signal quality measured by the UE within a second duration being less than a third threshold; or
a second condition being satisfied, comprising the radio signal quality measured by the UE being greater than a second threshold.

15. The method of claim 12, wherein in response to detecting that the measurement relaxation condition is satisfied, sending the measurement relaxation request information to the network node or sending the notification for indicating that the measurement relaxation condition is satisfied to the network node comprises:
in response to detecting that the measurement relaxation condition is satisfied, sending the measurement relaxation request information or the notification for indicating that the measurement relaxation condition is satisfied to the network node through a Signaling Radio Bearer (SRB) of the network node.

16. The method of any one of claims 2 to 17, wherein the measurement relaxation parameter comprises:
a first type of relaxation configuration, being a measurement relaxation configuration uniformly for all Cell Groups (CGs); or
a second type of relaxation configuration, being a Master Cell Group (MCG)-specific measurement relaxation configuration and/or a Secondary Cell Group (SCG)-specific measurement relaxation configuration.

17. The method of claim 16, wherein receiving the measurement relaxation parameter sent by the network node comprises:
receiving the first type of relaxation configuration sent by the MN node;
or
receiving the second type of relaxation configuration that is the MCG-specific measurement relaxation configuration sent by the MN node, and/or receiving the second type of relaxation configuration that is the SCG-specific measurement relaxation configuration sent by the SN node;
or
receiving the second type of relaxation configuration that is the MCG-specific measurement relaxation configuration sent by the MN node, and/or receive the second type of relaxation configuration that is the SCG-specific measurement relaxation configuration sent by the MN node.

18. An information processing method, performed by a network node, wherein the network node comprises a Master Network (MN) node or a Secondary Network (SN) node of a dual connectivity User Equipment (UE); the method comprises:
sending relevant information of a measurement relaxation to the UE;
wherein the relevant information comprises at least one of:
a measurement relaxation parameter, used for the measurement relaxation of the UE; or
a measurement relaxation indication, used for enabling or disabling the measurement relaxation of the UE.

19. The method of claim 18, further comprising:
receiving capability information of the UE; wherein the capability information is used for determining the measurement relaxation parameter.

20. The method of claim 19, wherein the capability information comprises:
a first type of capability information, for uniformly indicating a measurement relaxation capability for all Cell Groups (CGs) of the UE;
a second type of capability information, for separately indicating a Master Cell Group (MCG)-specific measurement relaxation capability of the UE and/or a Secondary Cell Group (SCG)-specific measurement relaxation capability of the UE; or
a third type of capability information, for indicating a relationship between the MCG-specific measurement relaxation capability of the UE and the SCG-specific measurement relaxation capability of the UE.

21. The method of claim 19 or 20, wherein the capability information comprises at least one of:
a first capability indicator, for indicating whether the UE supports a Radio Link Monitoring (RLM) measurement relaxation;
a second capability indicator, for indicating whether the UE supports a Beam Failure Detection (BFD) measurement relaxation; or
a third capability indicator, for indicating whether the UE supports a Radio Resource Management (RRM) measurement relaxation.

22. The method of any one of claims 19 to 21, wherein receiving the capability information of the UE comprises:
in response to the network node being the MN node, receiving, by the MN node, the capability information of the UE through a Signaling Radio Bearer (SRB) configured by the MN node;
or
in response to the network node being the SN node and the SN node having a configured SRB, receiving, by the SN node, the capability information of the UE through the SRB configured by the SN node;
or
in response to the network node being the MN node and the SN node having no configured SRB, receiving, by the MN node, an SRB containing the capability information received from the UE on the SRB configured by the SN node, wherein at least partial capability information indicating the SCG-specific measurement relaxation capability of the UE is sent by the MN node to the SN node.

23. The method of any one of claims 18 to 22, wherein sending the relevant information of the measurement relaxation to the UE comprises at least one of:
in response to the network node being the MN node, sending a measurement relaxation parameter for all Cell Groups (CGs) to the UE;
in response to the network node being the MN node, sending a Master Cell Group (MCG)-specific measurement relaxation parameter to the UE;
in response to the network node being the SN node and the SN node having a configured Signaling Radio Bearer (SRB), sending a Secondary Cell Group (SCG)-specific measurement relaxation parameter to the UE; or
in response to the network node being the MN node and the SN node having no configured SRB, sending an SCG-specific measurement relaxation parameter to the UE.

24. The method of claim 23, further comprising:
before the MN node sends the SCG-specific measurement relaxation parameter to the UE, receiving, from the SN node, assistant information used for sending the SCG-specific measurement relaxation parameter.

25. The method of any one of claims 18 to 22, further comprising:
receiving measurement relaxation request information or a notification for indicating that a measurement relaxation condition is satisfied; wherein the measurement relaxation request information is reported when the UE detects that the measurement relaxation condition is satisfied;
wherein sending the relevant information of the measurement relaxation to the UE comprises:
sending a measurement relaxation indication to the UE based on the measurement relaxation request information or the notification.

26. The method of claim 25, wherein the measurement relaxation indication comprises one of:
an enabling indication, for enabling the measurement relaxation of the UE; or
a disabling indication, for disabling the measurement relaxation of the UE.

27. The method of any one of claims 18 to 26, wherein the measurement relaxation parameter comprises at least one of:
a Radio Link Monitoring (RLM) measurement relaxation parameter;
a Beam Failure Detection (BFD) measurement relaxation parameter; or
a Radio Resource Management (RRM) measurement relaxation parameter.

28. The method of any one of claims 18 to 27, wherein the measurement relaxation parameter comprises:
a measurement relaxation criterion, for indicating a measurement relaxation condition of the UE; or
a relaxation configuration used for the measurement relaxation of the UE.

29. The method of claim 28, wherein the measurement relaxation condition comprises:
a first condition, comprising a displacement of the UE within a preset duration being less than a first threshold, and/or a fluctuation value of a radio signal quality measured by the UE within a second duration being less than a third threshold;
or
a second condition, comprising a radio signal quality measured by the UE within a second duration being greater than a second threshold.

30. An information processing method, performed by a Secondary Network (SN) node, comprising:
transmitting associated information of a User Equipment (UE) measurement relaxation with a Master Network (MN) node;
wherein the associated information comprises at least one of:
capability information, used for determining a measurement relaxation parameter of the UE;
a measurement relaxation indication, used for enabling or disabling the UE measurement relaxation;
a Secondary Cell Group (SCG)-specific measurement relaxation parameter; or
assistant information, used by the MN node for determining the SCG-specific measurement relaxation parameter of the UE.

31. The method of claim 30, wherein transmitting the associated information of the UE measurement relaxation with the MN node comprises:
in response to the SN node having no configured Signaling Radio Bearer (SRB), transmitting the associated information of the UE measurement relaxation with the MN node.

32. An information processing apparatus, comprising:
an acquiring module, configured to acquire a measurement relaxation parameter; wherein the measurement relaxation parameter is used by a User Equipment (UE) for relaxing a measurement of a radio signal transmitted by a network node;
wherein the network node comprises:
a Master Network (MN) node;
and/or
a Secondary Network (SN) node.

33. The apparatus of claim 32, wherein the acquiring module is configured to receive the measurement relaxation parameter sent by the network node; or determine the measurement relaxation parameter based on a protocol.

34. The apparatus of claim 32 or 33, wherein
the UE adopts an Evolution Universal mobile telecommunications system Terrestrial Radio Access Network-New Radio (E-UTRAN-NR) dual connectivity, and the network node comprises the SN node of the E-UTRAN-NR dual connectivity;
or
the UE adopts a Next Generation Radio Access Network-Universal mobile telecommunications system Terrestrial Radio Access-New Radio (NG-RAN-UTRA-NR) dual connectivity, and the network node comprises the SN node of the NG-RAN-UTRA-NR dual connectivity;
or
the UE adopts a New Radio-Evolution Universal mobile telecommunications system Terrestrial Radio Access Network (NR-E-UTRA) dual connectivity, and the network node comprises the MN node of the NR-E-UTRA dual connectivity;
or
the UE adopts a New Radio-New Radio (NR-NR) dual connectivity,, and the network node comprises the MN node of the NR-NR dual connectivity and/or the SN node of the NR-NR dual connectivity.

35. The apparatus of any one of claims 32 to 34, wherein the measurement relaxation parameter comprises at least one of:
a Radio Link Monitoring (RLM) measurement relaxation parameter;
a Beam Failure Detection (BFD) measurement relaxation parameter; or
a Radio Resource Management (RRM) measurement relaxation parameter..

36. The apparatus of any one of claims 32 to 35, further comprising:
a first relaxing module, configured to send capability information of the UE to the network node, wherein the capability information is used by the network node for determining the measurement relaxation parameter.

37. The apparatus of claim 36, wherein the capability information comprises at least one of:
a first capability indicator, for indicating whether the UE supports a Radio Link Monitoring (RLM) measurement relaxation;
a second capability indicator, for indicating whether the UE supports a Beam Failure Detection (BFD) measurement relaxation; or
a third capability indicator, for indicating whether the UE supports a Radio Resource Management (RRM) measurement relaxation.

38. The apparatus of claim 36 or 37, wherein the capability information comprises:
a first type of capability information, for uniformly indicating a measurement relaxation capability for all Cell Groups (CGs) of the UE;
a second type of capability information, for separately indicating a Master Cell Group (MCG)-specific measurement relaxation capability of the UE and/or a Secondary Cell Group (SCG)-specific measure relaxation capability of the UE; or
a third type of capability information, for indicating an relationship between the MCG-specific measurement relaxation capability of the UE and the SCG-specific measurement relaxation capability of the UE.

39. The apparatus of claim 38, wherein the first sending module is configured to perform at least one of
in response to the UE adopting a an Evolution Universal mobile telecommunications system Terrestrial Radio Access Network-New Radio (E-UTRAN-NR) Dual Connectivity (EN-DC), send the first type of capability information of the UE to the SN node or MN node of the EN-DC;
in response to the UE adopting a New Radio-Evolution Universal mobile telecommunications system Terrestrial Radio Access Network (NR-E-UTRA) Dual Connectivity (NE-DC), send the first type of capability information of the UE to the MN node of the NE-DC; or
in response to the UE adopting a New Radio-New Radio (NR-NR) Dual Connectivity (NR-DC), send the first type of capability information of the UE to the MN node of the NR-DC.

40. The apparatus of claim 36, wherein the first sending module is configured to perform one of:
sending, to the MN node, the second type of capability information that separately indicates the MCG-specific measurement relaxation capability of the UE; or
sending, to the SN node, the second type of capability information that separately indicates the SCG-specific measurement relaxation capability of the UE.

41. The apparatus of any one of claims 36 to 40, wherein the first sending module is configured to perform at least one of:
sending the capability information to the MN node through a Signaling Radio Bearer (SRB) of the MN node;
in response to the SN node having a configured SRB, sending the capability information to the SN node through the SRB of the SN node; or
in response to the SN node having no configured SRB, sending the capability information to the MN node through an SRB of the MN node, wherein the capability information is forwarded by the MN node to the SN node.

42. The apparatus of any one of claims 32 to 41, wherein the measurement relaxation parameter comprises: a measurement relaxation criterion for indicating a measurement relaxation condition; the apparatus comprises:
a second sending module, configured to, in response to detecting that the measurement relaxation condition is satisfied, send measurement relaxation request information to the network node or send a notification for indicating that the measurement relaxation condition is satisfied to the network node; wherein the measurement relaxation request information is used for triggering the network node to determine whether to allow the UE to relax the measurement.

43. The apparatus of claim 42, further comprising:
a first receiving module, configured to receive a measurement relaxation indication returned based on the measurement relaxation request information or the notification; and
a measuring module, configured to, in response to the measurement relaxation indication indicating to allow the UE to relax the measurement, measure the radio signal based on a relaxation configuration in the measurement relaxation parameter.

44. The apparatus of claim 43, wherein the measurement relaxation indication comprises one of:
an enabling indication, for enabling the UE to relax the measurement; or
a disabling indication, for disabling the UE to relax the measurement.

45. The apparatus of claim 42, wherein the measurement relaxation condition being satisfied comprises:
a first condition being satisfied, comprising a displacement of the UE within a preset duration being less than a first threshold, and/or a fluctuation value of a radio signal quality measured by the UE within a second duration being less than a third threshold; or
a second condition being satisfied, comprising the radio signal quality measured by the UE being greater than a second threshold.

46. The apparatus of claim 42, wherein the second sending module is configured to, in response to detecting that the measurement relaxation condition is satisfied, send the measurement relaxation request information or the notification for indicating that the measurement relaxation condition is satisfied to the network node through a Signaling Radio Bearer (SRB) of the network node.

47. The apparatus of any one of claims 33 to 46, wherein the measurement relaxation parameter comprises:
a first type of relaxation configuration, being a measurement relaxation configuration uniformly for all Cell Groups (CGs); or
a second type of relaxation configuration, being a Master Cell Group (MCG)-specific measurement relaxation configuration and/or a Secondary Cell Group (SCG)-specific measurement relaxation configuration.

48. The apparatus of claim 47, wherein the acquiring module is configured to perform at least one of:
receiving the first type of relaxation configuration sent by the MN node;
or
receiving the second type of relaxation configuration that is the MCG-specific measurement relaxation configuration sent by the MN node, and/or receiving the second type of relaxation configuration that is the SCG-specific measurement relaxation configuration sent by the SN node;
or
receiving the second type of relaxation configuration that is the MCG-specific measurement relaxation configuration sent by the MN node, and/or receive the second type of relaxation configuration that is the SCG-specific measurement relaxation configuration sent by the MN node.

49. An information processing apparatus, comprising:
a third sending module, configured to send relevant information of a measurement relaxation to a User Equipment (UE);
wherein the relevant information comprises at least one of:
a measurement relaxation parameter, used for the measurement relaxation of the UE; or
a measurement relaxation indication, used for enabling or disabling the measurement relaxation of the UE.

50. The apparatus of claim 49, further comprising:
a second receiving module, configured to receive capability information of the UE; wherein the capability information is used for determining the measurement relaxation parameter.

51. The apparatus of claim 50, wherein the capability information comprises:
a first type of capability information, for uniformly indicating a measurement relaxation capability for all Cell Groups (CGs) of the UE;
a second type of capability information, for separately indicating a Master Cell Group (MCG)-specific measurement relaxation capability of the UE and/or a Secondary Cell Group (SCG)-specific measurement relaxation capability of the UE; or
a third type of capability information, for indicating a relationship between the MCG-specific measurement relaxation capability of the UE and the SCG-specific measurement relaxation capability of the UE.

52. The apparatus of claim 50 or 51, wherein the capability information comprises at least one of:
a first capability indicator, for indicating whether the UE supports a Radio Link Monitoring (RLM) measurement relaxation;
a second capability indicator, for indicating whether the UE supports a Beam Failure Detection (BFD) measurement relaxation; or
a third capability indicator, for indicating whether the UE supports a Radio Resource Management (RRM) measurement relaxation.

53. The apparatus of any one of claims 49 to 52, wherein the second receiving module is configured to perform one of:
in response to the network node being the MN node, receiving, by the MN node, the capability information of the UE through a Signaling Radio Bearer (SRB) configured by the MN node;
or
in response to the network node being the SN node and the SN node having a configured SRB, receiving, by the SN node, the capability information of the UE through the SRB configured by the SN node;
or
in response to the network node being the MN node and the SN node having no configured SRB, receiving, by the MN node, an SRB containing the capability information received from the UE on the SRB configured by the SN node, wherein at least partial capability information indicating the SCG-specific measurement relaxation capability of the UE is sent by the MN node to the SN node.

54. The apparatus of any one of claims 48 to 53, wherein the third sending module is configured to perform at least one of:
in response to the network node being the MN node, sending a measurement relaxation parameter for all Cell Groups (CGs) to the UE;
in response to the network node being the MN node, sending a Master Cell Group (MCG)-specific measurement relaxation parameter to the UE;
in response to the network node being the SN node and the SN node having a configured Signaling Radio Bearer (SRB), sending a Secondary Cell Group (SCG)-specific measurement relaxation parameter to the UE; or
in response to the network node being the MN node and the SN node having no configured SRB, sending an SCG-specific measurement relaxation parameter to the UE.

55. The apparatus of claim 54, further comprising:
a third receiving module, configured to receive, from the SN node, assistant information used for sending the SCG-specific measurement relaxation parameter before the MN node sends the SCG-specific measurement relaxation parameter to the UE.

56. The apparatus of any one of claims 49 to 55, wherein the apparatus is configured to:
receive measurement relaxation request information or a notification for indicating that a measurement relaxation condition is satisfied; wherein the measurement relaxation request information is reported when the UE detects that the measurement relaxation condition is satisfied;
wherein the third sending module is configured to send a measurement relaxation indication to the UE based on the measurement relaxation request information or the notification.

57. The apparatus of claim 56, wherein the measurement relaxation indication comprises one of:
an enabling indication, for enabling the measurement relaxation of the UE; or
a disabling indication, for disabling the measurement relaxation of the UE.

58. The apparatus of any one of claims 49 to 57, wherein the measurement relaxation parameter comprises at least one of:
a Radio Link Monitoring (RLM) measurement relaxation parameter;
a Beam Failure Detection (BFD) measurement relaxation parameter; or
a Radio Resource Management (RRM) measurement relaxation parameter.

59. The apparatus of any one of claims 49 to 58, wherein the measurement relaxation parameter comprises:
a measurement relaxation criterion, for indicating a measurement relaxation condition of the UE; or
a relaxation configuration used for the measurement relaxation of the UE.

60. The apparatus of claim 59, wherein the measurement relaxation condition comprises:
a first condition, comprising a displacement of the UE within a preset duration being less than a first threshold, and/or a fluctuation value of a radio signal quality measured by the UE within a second duration being less than a third threshold;
or
a second condition, comprising a radio signal quality measured by the UE within a second duration being greater than a second threshold.

61. An information processing apparatus, comprising:
a transmitting module, configured to transmit associated information of a User Equipment (UE) measurement relaxation with a Master Network (MN) node;
wherein the associated information comprises at least one of:
capability information, used for determining a measurement relaxation parameter of the UE;
a measurement relaxation indication, used for enabling or disabling the UE measurement relaxation;
a Secondary Cell Group (SCG)-specific measurement relaxation parameter; or
assistant information, used by the MN node for determining the SCG-specific measurement relaxation parameter of the UE.

62. The apparatus of claim 61, wherein the transmitting module is configured to transmit the associated information of the UE measurement relaxation with the MN node in response to a Secondary Network (SN) node having no configured Signaling Radio Bearer (SRB).

63. A communication device, comprising a processor, a transceiver, a memory, and an executable program stored on the memory and executable by the processor, wherein when the processor runs the executable program, the method of any one of claims 1 to 17, 18 to 29, and 30 to 31 is performed.

64. A computer storage medium, having an executable program stored thereon; wherein after the executable program is executed by a processor, the method of any one of claims 1 to 3, 4 to 5, 6 to 11, and 12 to 13 is performed.
